# EUROPÄISCHE PATENTSCHRIFT

(11) **EP 2 985 497 B1**
(45) Veröffentlichungstag und Bekanntmachung des Hinweises auf die Patenterteilung: **11.10.2017**
(21) Anmeldenummer: 14180492.2
(22) Anmeldetag: 11.08.2014
(51) Int. Cl.: F16K 3/02, F16K 3/18, F16K 51/02, B29C 43/38, B29C 70/74, B29C 43/18, F16J 15/10, F16J 15/12

(54) **Verschlusselement für ein Vakuumventil mit abgepresster, aufvulkanisierter Dichtung**
Closuring element for a vacuum valve with pressed, vulcanised seal
Élément de verrouillage pour une soupape à vide doté d'un joint d'étanchéité injecté sous pression, vulcanisé

(43) Veröffentlichungstag der Anmeldung: 17.02.2016
(73) Patentinhaber: VAT Holding AG, 9469 Haag (CH)
(72) Erfinder: Bestebner, Jürgen, A-6842 Koblach (AT)
(74) Vertreter: Allwardt, Anke

(56) Entgegenhaltungen:
- DE-A1- 3 916 080
- US-A- 3 090 996
- US-A1- 2006 287 438
- US-A1- 2011 169 229

## Beschreibung

Die Erfindung betrifft ein Verschlusselement für ein Vakuumventil zum gasdichten Schliessen eines Fliesswegs nach dem Oberbegriff des Anspruchs 1, ein entsprechendes Vakuumventil nach dem Oberbegriff des Anspruchs 11, sowie ein Werkzeug und ein Verfahren zur Herstellung eines solchen Verschlusselements nach Anspruch 12 bzw. 14.

Allgemein sind Vakuumventile zum im Wesentlichen gasdichten Schliessen eines Fliesswegs, der durch eine in einem Ventilgehäuse ausgeformte Öffnung führt, in unterschiedlichen Ausführungsformen aus dem Stand der Technik bekannt. Vakuumschieberventile kommen insbesondere im Bereich der IC- und Halbleiterfertigung, die in einer geschützten Atmosphäre möglichst ohne das Vorhandensein verunreinigender Partikel stattfinden muss, zum Einsatz. Beispielsweise durchlaufen in einer Fertigungsanlage für Halbleiter-Wafer oder Flüssigkristall-Substrate die hochsensiblen Halbleiter- oder Flüssigkristall-Elemente sequentiell mehrere Prozesskammern, in denen die innerhalb der Prozesskammer befindlichen Halbleiterelemente mittels jeweils einer Bearbeitungsvorrichtung bearbeitet werden. Sowohl während des Bearbeitungsprozesses innerhalb der Prozesskammer, als auch während des Transports von Prozesskammer zu Prozesskammer müssen sich die hochsensiblen Halbleiterelemente stets in geschützter Atmosphäre - insbesondere im Vakuum - befinden. Die Prozesskammern sind beispielsweise über Verbindungsgänge miteinander verbunden, wobei die Prozesskammern mittels Vakuumschieberventile zum Transfer der Teile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres rechteckigen Öffnungsquerschnitts auch als Rechteckschieber bezeichnet.

Da Transferventile unter anderem bei der Herstellung hochsensibler Halbleiterelemente zum Einsatz kommen, muss die insbesondere durch die Betätigung des Ventils verursachte Partikelgenerierung und die Anzahl der freien Partikel im Ventilraum möglichst gering gehalten werden. Die Partikelgenerierung ist primär eine Folge von Reibung beispielsweise durch Metall-Metall-Kontakt und durch Abrasion.

Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Unterschiedliche Dichtvorrichtungen sind aus dem Stand der Technik bekannt, beispielsweise aus der US 6,629,682 B2 (Duelli). Ein geeignetes Material für Dichtungsringe ist beispielsweise das unter dem Handelsnamen Viton® bekannte elastische Dichtungsmaterial.

Die Anforderungen an die bei Vakuumventilen zum Einsatz kommenden Dichtungen sind sehr hoch. Einerseits muss im geschlossenen Zustand des Ventils die Dichtigkeit des Ventils gewährleistet sein. Dies ist vor allem aufgrund der im Vakuumbereich hohen Differenzdrücke und der somit auftretenden grossen Kräfte, die auf den Ventilverschluss wirken, eine grosse Herausforderung. Da die zum Einsatz kommenden Dichtungen bei übermässig hohen Verpressungen einem überdurchschnittlichen hohen Verschleiss unterliegen oder zerstört werden, muss der Aufbau des Ventils derart sein, dass die Differenzdruckkräfte nicht oder nur begrenzt auf die Dichtungen wirken können. Die Verpressung der Dichtung sollte entlang ihres Verlaufs möglichst gleichmässig erfolgen, was eine gleichmässige Anpresskraft des Ventiltellers auf den Ventilsitz im gesamten Berührungsbereich erfordert. Vor allem sind Querbelastungen und Längsbelastungen auf die Dichtung möglichst gering zu halten. Bei Querbelastungen quer zu der Längsrichtung der Dichtung besteht bei O-Ring-Dichtungen die Gefahr, dass sie aus ihrer Halterung, insbesondere der Nut, in welcher sie fixiert sind, gerissen werden. Auch aufvulkanisierte Dichtungen dürfen nur sehr begrenzten Querkräften ausgesetzt werden. Sowohl im geöffneten als auch geschlossenen Zustand des Ventils sind die Dichtungen zum Teil aggressiven Medien ausgesetzt und müssen daher entweder derart beschaffen sein, dass sie den Einflüssen standhalten können, und/oder aus dem Fliessweg des Mediums, auch zur Vermeidung von Abrasion, herausbewegt werden. Ein übermässig hoher Verschleiss der Dichtung stellt einen Unsicherheitsfaktor für die Prozesssicherheit dar und erfordert einen regelmässigen Austausch der Dichtung, was wiederum zu erhöhten Stillstandszeiten im Prozess führt. Unterschiedliche Ausführungsformen von Vakuumventilen, insbesondere deren Dichtungs- und Antriebstechnologien, sind aus dem Stand der Technik bekannt, vgl. z.B. US2006/0287438, welche unter
anderem als Ziel die Erhöhung der Lebensdauer der eingesetzten Dichtungen sowie eine verbesserte Prozesssicherheit haben.

Abhängig von den jeweiligen Antriebstechnologien wird insbesondere zwischen Schieberventilen, auch Ventilschieber oder Rechteckschieber genannt, und Pendelventilen unterschieden, wobei das Schliessen und Öffnen im Stand der Technik meistens in zwei Schritten erfolgt. In einem ersten Schritt wird ein Ventilverschlussglied, insbesondere ein Verschlussteller oder ein Verschlusselement, im Falle eines Schieberventils, wie beispielsweise aus der US 6,416,037 (Geiser) oder der US 6,056,266 (Blecha) bekannt, insbesondere des L-Typs, linear über eine Öffnung im Wesentlichen parallel zum Ventilsitz verschoben oder im Falle eines Pendelventils, wie beispielsweise aus der US 6,089,537 (Olmsted) bekannt, um eine Schwenkachse über die Öffnung geschwenkt, ohne dass hierbei eine Berührung zwischen dem Verschlussteller und dem Ventilsitz des Ventilgehäuses stattfindet. In einem zweiten Schritt wird der Verschlussteller mit dessen Verschlussseite auf den Ventilsitz des Ventilgehäuses gedrückt, so dass die Öffnung gasdicht verschlossen wird. Die Abdichtung kann z.B. entweder über eine auf der Verschlussseite des Verschlusstellers angeordnete Dichtung, die auf den die Öffnung umlaufenden Ventilsitz gepresst wird, erfolgen, oder über einen Dichtungsring auf dem Ventilsitz, gegen den die Verschlussseite des Verschlusstellers gedrückt wird. Die Dichtung insbesondere der Dichtungsring, kann in einer Nut gehalten und/oder aufvulkanisiert sein.

Die beschriebene zweistufige Bewegung, bei welcher das Verschlussglied zuerst quer über die Öffnung geschoben wird, ohne dass es zu einer Berührung der Dichtung mit dem Ventilsitz kommt, und das Verschlussglied im Anschluss im Wesentlichen senkrecht auf den Ventilsitz gedrückt wird, hat neben der Möglichkeit einer präzisen Regelung des Durchflusses vor allem den Vorteil, dass die Dichtung nahezu ausschliesslich senkrecht verpresst wird, ohne dass es zu einer Quer- oder Längsbelastung der Dichtung kommt. Der Antrieb weist einen verhältnismässig komplexe Aufbau auf, der insbesondere entweder von einem einzigen Antrieb, der eine L-förmige Bewegung des Verschlussglieds ermöglicht, oder von einer Mehrzahl an Antrieben, beispielsweise zwei Linearantrieben oder einem Linear- und einem Spreizantrieb, gebildet wird. Spreizantriebe, welche meist unmittelbar hinter dem Verschlussteller angeordnet sind und diesen relativ zu dem Schaft, auf welchem sie sich befinden, in senkrechter Richtung auf den Ventilsitz verstellen, weisen eine Vielzahl an mechanischen Teilen, welche zueinander Relativbewegungen ausführen, im Ventilinneren auf.

Keilventile, die lediglich linear verstellt werden, ermöglichen eine deutlich höhere Verstellgeschwindigkeit, sie eignen sich jedoch aufgrund der Querbeanspruchung der Dichtung zum Teil kaum für den Vakuumbereich, und wenn doch, dann für nur wenige Verstellzyklen.

Dieses Problem wird mittels Schieberventilen gelöst, bei welchen der Schliess- und Dichtvorgang zwar über eine einzige lineare Bewegung erfolgt, jedoch die Dichtgeometrie derart ist, dass eine Querbeanspruchung der Dichtung gänzlich vermieden wird. Ein solches Ventil ist beispielsweise das unter der Produktbezeichnung "MONOVAT Reihe 02 und 03" bekannte und als Rechteckinsertventil ausgestaltete Transferventil der Firma VAT Vakuumventile AG in Haag, Schweiz. Der Aufbau und die Funktionsweise eines solchen Ventils werden beispielsweise in der US 4,809,950 (Geiser) und der US 4,881,717 (Geiser) beschrieben.

Das dort beschriebene Ventil besitzt in seinem Gehäuse eine Dichtfläche, die, in Richtung der Achse der Ventildurchgangsöffnung gesehen, hintereinander liegende Abschnitte besitzt, die in seitlich nach aussen verlaufende, ebene Dichtflächenabschnitte über stetig verlaufende Krümmungen übergehen, wobei die gedachten Erzeugenden dieser einteiligen, aber mehrere Abschnitte aufweisenden Dichtfläche parallel zur Achse der Ventildurchgangsöffnung liegen. Die Dichtfläche ist bearbeitet. Das Verschlussglied besitzt eine dazu korrespondierende Auflagefläche für die umfangsgeschlossene Dichtung. Detaillierter beschrieben besitzt der so genannte Ventilschieber ein Schiebergehäuse und eine Schieberdurchgangsöffnung, die mit einem in seiner Ebene verschiebbaren Verschlussglied verschliessbar ist. Im Bereich der Schieberdurchgangsöffnung ist eine Dichtfläche vorgesehen, an der in der Schliessstellung des Verschlussgliedes eine an diesem angeordnete, umfangsgeschlossene Dichtung anliegt, wobei die gedachten, geraden Erzeugenden der Dichtfläche parallel zur Achse der Schieberdurchgangsöffnung liegen. Die umfangsgeschlossene, einstückige Dichtung weist Abschnitte unterschiedlicher Längen und/oder Formen auf, die in verschiedenen Ebenen liegen, wobei zwei Hauptabschnitte der umfangsgeschlossenen Dichtung in Ebenen liegen, welche zur Achse der Schieberdurchgangsöffnung rechtwinklig stehen und voneinander distanziert sind. Die beiden Hauptabschnitte der Dichtung sind durch Seitenabschnitte verbunden. Das Verschlussglied besitzt zum Verlauf der Dichtfläche des Gehäuses eine korrespondierend verlaufende, die umfangsgeschlossene Dichtung tragende Fläche. Die Seitenabschnitte der umfangsgeschlossenen Dichtung verlaufen U-förmig. Jeweils die Schenkel dieser U-förmig verlaufenden Seitenabschnitte liegen in einer Ebene. Die in Achsrichtung der Schieberdurchgangsöffnung gesehen hintereinander liegenden Abschnitte der Dichtfläche gehen für die Anlage der Hauptabschnitte der Dichtung in jenem Bereich, in dem sie eine gemeinsame, gerade, achsparallele Erzeugende besitzen, in seitlich nach aussen verlaufende ebene Dichtflächenabschnitte über. Diese ebenen Dichtflächenabschnitte liegen in zueinander und zur Achse der Schieberdurchgangsöffnung parallel liegenden Ebenen.

Ein geeigneter Antrieb für ein solches, mittels einer linearen Bewegung verschliessbares Transferventil ist in der JP 6241344 (Buriida Fuuberuto) dargestellt. Der dort beschriebene Antrieb besitzt exzentrisch gelagerte Hebel zum linearen Verschieben der Schubstangen, auf welchen das Verschlussglied montiert ist.

Im Wesentlichen unabhängig vom oben genannten Antriebstechnologien für Ventilverschlüsse sind die Ausführungen für auf dem Verschlusselement vorgesehene oder aufgebrachte Dichtungen. Wie oben erwähnt ist eine solche Dichtung typischerweise als O-Ring in einer Nut realisiert oder - für eine verbesserte Haltbarkeit - mittels eines speziellen Werkzeugs auf das Verschlusselement aufvulkanisiert.

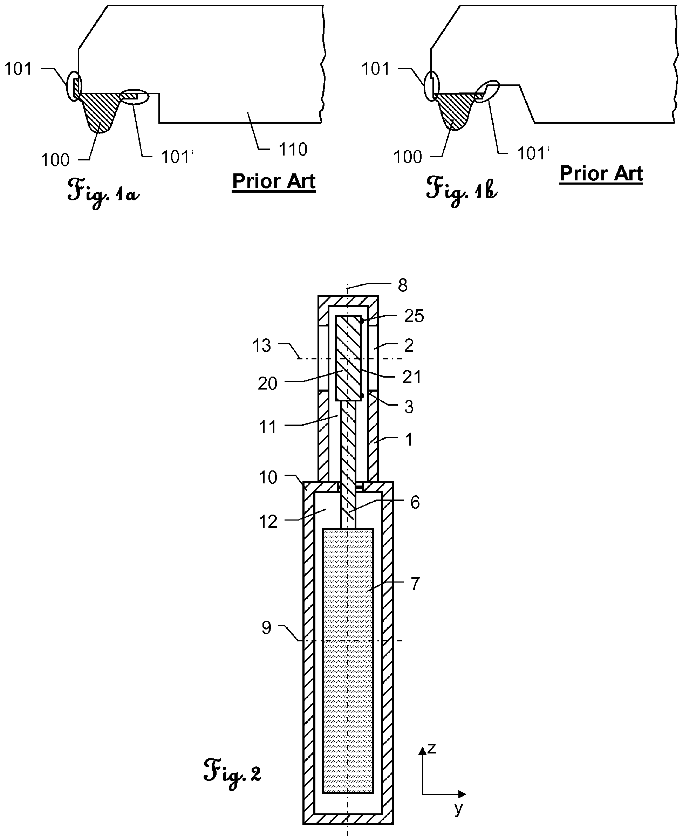

Für das Vulkanisieren der Dichtung sind Überlaufspalte vorgesehen damit ein Überschuss an Dichtungsmaterial, z.B. Elastomer, abgeführt werden kann und die Dichtung 100 entsprechend der durch das Werkzeug vorgegebene Form erzeugt werden kann (vgl. Fig. 1a). Jedoch verbleibt das durch die Überlaufspalte ausgetretene Material 101,101' an dem Plattenrohling 110, welcher beispielsweise aus Aluminium oder Edelstahl gefertigt ist, und muss im Anschluss an das Vulkanisieren mechanisch entfernt werden. Dieses Entfernen erfolgt heute zumeist mittels Trimmen im Bereich der Übergangszone Metall/Dichtmaterial und resultiert in einem Abtrag von sowohl Dichtmaterial als such Metall wie in den Bereichen 101 und 101' von Fig. 1b gezeigt.

Ein grosser Nachteil bei diesem Prozess ist jedoch das Entstehen von Partikel und die Gratbildung beim Materialabtrag durch das Trimmen. Da eben diese Partikelbildung und das Zurückbleiben solcher Partikel auf dem Ventilverschlusselement für die im Vakuumbereich auszuführende Bearbeitungsprozesse extrem kritisch ist, ist eine Verringerung oder bestenfalls vollständige Vermeidung derartiger Partikel anzustreben.

Es ist daher Aufgabe der Erfindung, eine Verschlussplatte bzw. Verschlusselement für ein Vakuumventil, insbesondere ein Vakuum-Transferventil, mit einer aufvulkanisierten Dichtung zur Verfügung zu stellen, wobei eine verbesserte Prozesssicherheit erzielt wird.

Insbesondere ist es eine Aufgabe eine entsprechendes Verschlusselement bereitzustellen, wobei eine produktionsbedingte Gratbildung oder die Entstehung von Rückstandspartikeln zumindest in dem dem abzuschliessenden Prozessvolumen zugewandten Teil minimiert oder gänzlich vermieden ist.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft ein Verschlusselement für Vakuumventile, wobei die Dichtung derart auf das Verschlusselement aufgebracht ist, dass eine nachfolgende abtragende Bearbeitung des Verschlusselements zumindest in jenen Bereichen, die im Einsatz dem abzuschliessenden Prozessvolumen zugewandt sind, insbesondere in direktem Kontakt mit diesem Volumen stehen, entfallen kann. Somit ist kein spanendes Nachbearbeiten des Verschlusselements in diesen Bereichen mehr nötig, z.B. Trimmen, wodurch die Entstehung von (Kleinst-) Partikeln oder von Graten weitestgehend ausbleibt.

Das Verschlusselement ist allgemein der Verschluss (auch bezeichnet als Ventilteller, Verschlussplatte oder Verschlussglied), mittels welchem die Öffnung des Vakuumventils gasdicht verschlossen werden kann. In einer Anordnung in einem gattungsgemässen Vakuumventil ist das Verschlusselement, das beispielsweise als Ventilteller ausgebildet sein kann, typischerweise zumindest linear entlang einer zu der Öffnungsachse quer verlaufenden, geometrischen Verstellachse in einer Verschlusselementebene zwischen einer geöffneten Position und einer geschlossenen Position verschiebbar. Vorzugsweise verläuft die Verstellachse senkrecht zu der Öffnungsachse und liegt auf einer Ebene, die senkrecht von der Öffnungsachse durchstossen wird. Alternativ verläuft die Verstellachse schräg und nichtparallel zu der Öffnungsachse, wobei der Schnittwinkel insbesondere zwischen 90 Grad und 45 Grad beträgt.

Insbesondere ist das Verschlusselement zudem in Richtung der Öffnungsachse bewegbar, sodass ein Verschliessen der Ventilöffnung durch ein im Wesentlichen senkrechtes Aufpressen des Verschlusselements auf den Ventilsitz in einer zweiten Stufe des Bewegungsablaufes erfolgen kann (L-Typ). Dadurch kann eine Querbeanspruchung der aufvulkanisierten Dichtung möglichst klein gehalten werden, wodurch auch das Entstehen von Abriebspartikel entsprechend vermindert wird.

Im konkreten betrifft die Erfindung ein Verschlusselement, insbesondere ein Ventilteller, für ein Vakuumventil, wobei das Verschlusselement ausgebildet ist zum gasdichten Abschluss eines Vakuum-Prozessvolumens mittels Zusammenwirkens mit einer für das Prozessvolumen vorgesehenen Vakuumventilöffnung des Vakuumventils.

Das Verschlusselement ist somit ausgebildet zum gasdichten Schliessen einer Ventilöffnung für einen Fliesswegs unter Vakuumbedingungen. Unter dem Fliessweg ist allgemein ein zu schliessender Öffnungspfad zwischen zwei Bereichen - insbesondere zwischen zwei Beschichtungsanlagen jeglicher Art, beispielsweise für Solar- oder sonstige Anwendungen, oder zwischen einer Prozesskammer zur Halbleiterfertigung und entweder einer weiteren Prozesskammer oder der Aussenwelt - zu verstehen. Der Fliessweg ist beispielsweise ein Verbindungsgang zwischen zwei miteinander verbundenen Prozesskammern, wobei die Prozesskammern mittels des Vakuumventils zum Transfer der Halbleiterteile von der einen zur nächsten Prozesskammer geöffnet und im Anschluss zur Durchführung des jeweiligen Fertigungsschritts gasdicht verschlossen werden können. Derartige Ventile werden aufgrund des beschriebenen Anwendungsgebiets auch als Vakuum-Transferventile und aufgrund ihres oft rechteckigen Öffnungsquerschnitts auch als Rechteckschieber bezeichnet. Selbstverständlich ist jedoch auch jede beliebige andere Anwendung des erfindungsgemässen Vakuumventils zum im Wesentlichen gasdichten Schliessen eines beliebigen Fliesswegs möglich.

Das Verschlusselement weist eine zu einer zweiten Dichtfläche der Vakuumventilöffnung, insbesondere hinsichtlich Form und Grösse, korrespondierende erste Dichtfläche auf, wobei die zweite Dichtfläche die Vakuumventilöffnung umläuft. Die erste Dichtfläche des Verschlusselements entspricht also insbesondere hinsichtlich Form und Grösse der die Ventilöffnung umlaufenden Dichtfläche (insbesondere der Form des Ventilsitzes).

Zudem weist das Verschlusselement ein auf die erste Dichtfläche und entsprechend ihrem Verlauf aufvulkanisiertes, eine definierte Höhe in Richtung der Flächennormalen der ersten Dichtfläche aufweisendes Dichtmaterial auf, wobei das Dichtmaterial eine definierte Form bezüglich eines Dichtmaterialquerschnitts (Querschnitt durch das Dichtmaterial senkrecht zu dessen Erstreckungsrichtung) aufweist mit einem ersten, insbesondere prozessvolumenseitig vorgesehenen (d.h. einem bei einer Anordnung in einem Vakuumventil und im geschlossenen Zustand dem abzuschliessenden Prozessvolumen zugewandten bzw. mit diesem in Kontakt stehenden Abschnitt), Dichtungsabschnitt und einem zweiten, insbesondere vom Prozessvolumen abgewandt vorgesehenen, Dichtungsabschnitt. Typischerweise sind derartige Verschlusselement - so auch das erfindungsgemässe - so ausgebildet, dass bereits aufgrund der Ausgestaltung des Verschlusselements festgelegt ist, welcher Teil des Verschlusselements und auch des Dichtungsmaterials im Einsatz mit dem abzutrennenden Prozessvolumen (Vakuumbereich) in Kontakt kommt oder steht und welcher zweite Teil ausserhalb dieses Volumens verbleibt, also in geschlossenem Zustand nicht (unmittelbar) diesem Prozessvolumen ausgesetzt ist.

Hinsichtlich der Produktqualität insbesondere bezüglich Reinheit, also dem Vorhandensein etwaiger Partikel oder Grate, ist der erste Dichtungsabschnitt (also derjenige, welcher im geschlossenen Ventilzustand dem Prozessvolumen zugewandt ist) der prozesskritische. Insbesondere dieser Abschnitt darf möglichst keine Verunreinigungen oder Materialrückstände aufweisen.

Das Verschlusselement weist daher eine an den ersten Dichtungsabschnitt angrenzende Verpressung mit einer Presskante auf. Zudem ist die Presskante derart ausgeformt und bezüglich des ersten Dichtungsabschnitts ausgebildet, dass der durch die Form des ersten Dichtungsabschnitts gegebene und zur Presskante auslaufende Oberflächenverlauf des Dichtmaterials (bezüglich des Querschnitts durch das Dichtmaterial) im Wesentlichen homogen, insbesondere linear, durch die Presskante (d.h. durch die Position und Richtung der Presskante relativ zum auslaufenden Dichtmaterial) weitergeführt ist. Dies umfasst auch eine leicht gewinkelte Weiterführung des Oberflächenverlaufs mittels der Presskante.

Die Verpressung in dem Verschlusselement entsteht beim Aufbringen und Vulkanisieren des Dichtmaterials. Dadurch wird ein Materialüberlauf in zumindest jene Richtung, welche der späteren (d.h. beim Einsatz des Verschlusselements in einem Vakuumventil) Prozessseite entspricht, unterbunden und zugleich das Dichtmaterial so angeformt, dass ein homogener Materialübergang entsteht. Eine Nachbearbeitung dieses Transitbereichs

(Dichtstoff/Metall) ist damit nicht mehr erforderlich, wodurch eine Gratbildung und eine dadurch bedingte Partikelentstehung weitgehend verhindert werden kann.

Gemäss einer spezifischen Ausführungsform der Erfindung weist das Verschlusselement eine weitere Verpressung mit einer weiteren Presskante auf, die an den zweiten Dichtungsabschnitt angrenzt. Diese zweite Verpressung bzw. Presskante und der zweite Dichtungsabschnitt sind relativ zueinander derart positioniert und jeweils derart ausgeformt, dass die Oberflächenlinie nach dem Prinzip seitens des ersten Dichtungsabschnitts auch auf dieser Seite durchgehend im Wesentlichen homogen geführt ist.

Bezüglich der Ausformung des ersten Dichtungsabschnitts ist dieser gemäss einer Ausführungsform der Erfindung in einem an die Verpressung angrenzenden Bereich derart ausgeformt, dass in diesem Bereich der Oberflächenverlauf des Dichtmaterials (in Querschnittsrichtung) homogen ist und eine homogene Krümmung aufweist, die eine kantenlose Richtungsänderung des Oberflächenverlaufs, insbesondere zwischen 75° und 105°, insbesondre 90°, bewirkt. Dadurch ist ein kontinuierlicher Übergang der Oberflächenlinie des Dichtmaterials in das Trägermaterial des Verschlusselements ermöglicht, so dass eine bündig abgeformte, saubere Dichtung erzeugt werden kann.

Gemäss einer bestimmten Ausführungsform der Erfindung ist die Krümmung (im an die Verpressung angrenzenden Bereich) wendepunktfrei. Insbesondere weist die Krümmung eine konstante Krümmungsrichtung auf. Durch eine derartige Ausgestaltung des ersten Dichtabschnitts ist ein homogener Verlauf der Dichtungsoberfläche (entsprechend des Dichtungsquerschnitts) und ein entsprechender Übergang zum Trägermaterial gegeben.

Ferner beträgt die Richtungsänderung des Oberflächenverlaufs im an die Verpressung angrenzenden Bereich gemäss einer speziellen Ausführungsform der Erfindung im Wesentlichen 90°.

Mit Erzeugen der Verpressung im Verschlusselement kann im Zuge des Vulkanisierens des Dichtmaterials ein entsprechender Abschluss der Vulkanisationskammer geschaffen werden. Damit dieser Abschluss bündig und dicht mit der Oberfläche des Verschlusselements entsteht ist eine Einpressung in das Trägematerial (= Material des Verschlusselements) insbesondere mit einer bestimmten Tiefe erforderlich. Gleichzeitig soll ausserdem die Struktur und Stabilität des Verschlusselements unberührt bleiben. Bei einem Abtragen des überschüssigen Dichtmaterials gemäss dem Stand der Technik wird typischerweise ein Materialabtrag (z.B. durch Trimmen) des Trägermaterials des Verschlusselements (Metall oder Legierung) im Bereich von 0.2 mm erzeugt.

Eine weitere Ausführung der Erfindung betrifft also die Verpressung des Verschlusselements, wobei die Verpressung eine Tiefe in Richtung der Flächennormalen der ersten Dichtfläche und bezüglich der Oberfläche dieser Dichtfläche im Bereich von 0.15 bis 0.25 mm aufweist.

Insbesondere weist die Presskante, welche durch die Verpressung erzeugt ist, eine Länge zwischen 0.15 und 0.25 mm auf.

Bezüglich der Form der Verpressung weist eine Ausführungsform der Erfindung insbesondere die Presskante so auf, dass diese im Wesentlichen parallel zur Flächennormale der ersten Dichtfläche verläuft (im Querschnitt betrachtet).

Hinsichtlich der durch den Vulkanisationsprozess erzeugten Oberflächenbeschaffenheit ist es vorteilhaft, dass die Oberfläche ohne eine notwendige Nachbearbeitung des Materials eine deutlich geringerer Oberflächenrauheit aufweist - verglichen mit einer Vulkanisation und einem teilweisen Abtrag des Dichtungsmaterials, wobei nach der Bearbeitung Oberflächenrauheiten im Bereich um Rₐ = 0.8 µm bzw. R_{z} = 7.0 µm vorliegen. Eine geringere Oberflächenrauheit bedeutet gleichzeitig eine Verkleinerung der Angriffsfläche hinsichtlich z.B. einer möglichen Partikelauslösung.

Erfindungsgemäss weist der erste Dichtungsabschnitt insbesondere zumindest im an die Verpressung angrenzenden Bereich eine mittlere Oberflächenrauheit Rₐ zwischen 0.02 µm und 0.15 µm, insbesondere zwischen 0.05 µm und 0.1 µm, auf.

Alternativ oder ergänzend weist der erste Dichtungsabschnitt insbesondere zumindest im an die Verpressung angrenzenden Bereich eine gemittelte Oberflächenrautiefe R_{z} zwischen 0.2 µm und 1.5 µm, insbesondere zwischen 0.5 µm und 1 µm, auf.

Ein derartiger Oberflächenzustand wird hier erreicht durch eine entsprechend glatte Werkzeugoberfläche, insbesondere der für die Vulkanisation vorgesehen Ausnehmung im Werkzeug.

Gemäss einer spezifischen Ausführungsform des Verschlusselements besteht das Dichtmaterial zumindest teilweise, jedoch vorzugsweise hauptsächlich, aus einem Elastomer. Beispielsweise weist das Dichtmaterial ein Fluorelastomer auf, welches z.B. unter der Bezeichnung Viton®-Fluorelastomer, z.B. Viton® A oder Viton® B, oder als Dai-el®-Fluorelastomer, z.B. Dai-el® G 902 etc., als Tecnoflon™ oder Tecnoflon™-Fluorelastomer im Handel ist. Das Dichtmaterial kann auch auf Basis eines peroxidhärtbaren Fluorkautschuk-Compounds aufgebaut sein, wie dies beispielsweise in der DE 10 2007 048 252 A1 der Anmelderin beschrieben ist. Derartige Materialien bieten insbesondere eine hohe Beständigkeit auch gegenüber aggressiven chemischen Medien, wie z.B. einem in dem Prozessvolumen vorliegenden Prozessgas.

Gemäss einer weiteren erfindungsgemässen Ausführungsform weist das Verschlusselement eine Kopplung zur Verbindung mit einer Antriebseinheit eines Vakuumventils zur Bereitstellung einer gesteuerten Bewegung des Verschlusselements im Vakuumventil auf, insbesondere eine Aufnahme für eine Schubstange der Antriebseinheit. Die Aufnahme ist insbesondere seitlich im Verschlusselement ausgeformt (bezüglich einer Verschlussseite des Verschlusselements), zum abnehmbaren Montieren des Verschlusselements auf der Schubstange durch Eingreifen eines Verbindungsabschnitts der Schubstange in die Aufnahme. Zudem ist die Schubstange mittels der Antriebseinheit insbesondere so gelagert und verstellbar, dass durch Verschieben des Verschlusselements im Wesentlichen entlang der Schubstangenachse über eine Ventilöffnung und Andrücken des Verschlusselements mit dessen Dichtmaterial auf einen die Ventilöffnung umlaufenden Ventilsitz die Ventilöffnung verschliessbar ist.

Das Verschlusselement ist also durch diese Kopplung speziell ausgebildet zum Einsatz in einem Vakuumventil, insbesondere des L-Typs, und kann dadurch mit der Antriebseinheit verbunden und gemäss einem vorgegebenen Muster im Ventil bewegt werden.

Gemäss einer weiteren Ausführungsform der Erfindung weist das Verschlusselement zumindest eine Griffmulde, die in einer der Verschlussseite mit dem aufvulkanisierten Dichtmaterial (des Verschlusselements) gegenüberliegenden Seite ausgeformt ist, zur manuellen Kraftaufbringung auf den Verschlussteller im Wesentlichen entlang der Schubstangenachse auf, insbesondere zum Abnehmen oder zur Montage des Verschlusstellers von bzw. auf der Schubstange.

Für eine verbesserte Handhabung des Verschlusselements bei z.B. der Demontage sind beispielsweise zwei Griffmulden in der der Verschlussseite gegenüberliegenden Seite ausgeformt, um manuell eine Kraft auf das Verschlusselement im Wesentlichen nach oben zum Abnehmen des Verschlusstellers von der Schubstange aufbringen zu können und/oder zur besseren Handhabung des Verschlusstellers nach der Demontage. Die Griffmulden können innen zur besseren Griffigkeit rutschfest beschichtet sein.

Die Erfindung betrifft ausserdem ein Vakuumventil zum gasdichten Abschluss eines Prozessvolumens, mit einem Ventilgehäuse, das eine Vakuumventilöffnung und einen die Vakuumventilöffnung umlaufenden eine zweite Dichtfläche aufweisenden Ventilsitz aufweist. Zudem weist das Vakuumventil ein Verschlusselement zum im Wesentlichen gasdichten Verschliessen der Vakuumventilöffnung auf mit einer ersten zu der zweiten Dichtfläche korrespondierenden Dichtfläche, wobei die erste Dichtfläche ein aufvulkanisiertes, eine definierte Höhe in Richtung der Flächennormalen der ersten Dichtfläche aufweisendes Dichtmaterial aufweist und das Dichtmaterial eine definierte Form bezüglich eines Dichtmaterialquerschnitts aufweist mit einem ersten, insbesondere prozessvolumenseitig vorgesehenen, Dichtungsabschnitt und einem zweiten, insbesondere vom Prozessvolumen abgewandt vorgesehenen, Dichtungsabschnitt.

Das Vakuumventil verfügt ausserdem über eine mit dem Verschlusselement gekoppelte Antriebseinheit, die derart ausgebildet ist, dass das Verschlusselement zumindest im Wesentlichen entlang einer geometrischen Längsachse in eine Längsschliessrichtung von einer Offenposition, in welcher das Verschlusselement die Vakuumventilöffnung freigibt, in eine Schliessposition, in welcher die erste Dichtfläche des Verschlusselements auf die zweite Dichtfläche angedrückt ist und die Vakuumventilöffnung im Wesentlichen gasdicht verschliesst, und zurück verstellbar ist.

Erfindungsgemäss weist das Verschlusselement eine an den ersten Dichtungsabschnitt angrenzende Verpressung mit einer Presskante auf. Zudem ist die Presskante derart ausgeformt und bezüglich der ersten Dichtungsabschnitts ausgebildet, dass der durch die Form des ersten Dichtungsabschnitts gegebene und zur Presskante auslaufende Oberflächenverlauf des ersten Dichtungsabschnitts (in Bezug auf einen Querschnitt durch das Dichtmaterial)homogen, insbesondere linear, weitergeführt ist.

Insbesondere ist der erste Dichtungsabschnitt in einem an die Verpressung angrenzenden Bereich derart ausgeformt, dass in diesem Bereich der Oberflächenverlauf des Dichtmaterials in Querschnittsrichtung homogen ist und eine eine kantenlose Richtungsänderung des Oberflächenverlaufs, insbesondere zwischen 75° und 105°, bewirkende homogene Krümmung aufweist.

Insbesondere kann das Verschlusselement durch eine Beweglichkeit des Verschlusselements im Wesentlichen entlang einer rechtwinklig zur Längsachse verlaufenden geometrischen Querachse in eine Querschliessrichtung in eine Zwischenposition (Ventilverschluss des L-Typs, d.h. L-förmiger Bewegungsablauf), in welcher das Verschlusselement die Öffnung überdeckt und sich eine Verschlussseite des Verschlusselements in einer beabstandeten Gegenüberlage zum Ventilsitz befindet, und zurück vermittels der Antriebseinheit verstellbar sein.

Weiterhin ist das Verschlusselement des Vakuumventils gemäss entsprechender spezifischer Ausführungsformen der Erfindung insbesondere ausgebildet gemäss einer der oben beschriebenen Ausführungsvarianten.

Die Erfindung betrifft zudem ein Mehrfunktionswerkzeug für die Aufbringung und Ausformung eines Dichtmaterials, insbesondere auf ein obiges Verschlusselement, auf ein bzw. einem Materialrohteil, mit einer die Form des resultierenden, vulkanisierten Dichtmaterials definierenden Ausnehmung, einer ein erstes Ende der Ausnehmung bezüglich eines Werkzeugquerschnitts bildenden Abpresskante, einer an die Ausnehmung an ihrem zweiten Ende anschliessenden Aussparung und einer Aufnahme für Dichtmaterial.

Die Ausnehmung ist in einem an die Abpresskante angrenzenden Bereich derart ausgeformt, dass ein Verlauf der Abpresskante bezüglich des Werkzeugquerschnitts in diesem Bereich durch einen angepassten Werkzeugoberflächenverlauf im Wesentlichen homogen, insbesondere linear, weitergeführt ist (d.h. auch einen leichten Winkelversatz zwischen Abpresskante und weiterer Werkzeugoberfläche umfassend). Das Mehrfunktionswerkzeug wirkt ausserdem bei einem Schliessen des Werkzeugs mit den eingebrachten Materialrohteil derart zusammen, dass die Abpresskante in das Materialrohteil verpresst und die Ausnehmung an ihrem ersten Ende mit dem Materialrohteil abschliesst, die Aussparung einen Überlaufkanal bildet und das in der Aufnahme vorliegendes Dichtmaterial durch den Überlaufkanal in die Ausnehmung gedrückt wird und/oder fliesst. Ferner ist das Werkzeug so ausgebildet, dass das Dichtmaterial dann in einem geschlossenen Werkzeugzustand ausvulkanisierbar ist.

Insbesondere sind das Mehrfunktionswerkzeug, das Materialrohteil und/oder die Aufnahme für das Dichtmaterial gemäss einer vorbestimmten Vernetzungskurve temperierbar. Das Materialrohteil bildet dabei insbesondere das Verschlusselement oder einen Teil des Verschlusselements.

Gemäss einer weiteren Ausführungsform des Mehrfunktionswerkzeugs ist die Ausnehmung in dem an die Abpresskante angrenzenden Bereich derart ausgeformt, dass in diesem Bereich der Werkzeugoberflächenverlauf entlang des Werkzeugquerschnitts homogen ist und eine eine kantenlose Richtungsänderung des Werkzeugoberflächenverlaufs, insbesondere zwischen 75° und 105°, bewirkende homogene Krümmung aufweist. Alternativ oder zusätzlich kann das Werkzeug einen homogenen Übergang der Oberflächenlinie entlang des Werkzeugquerschnitts von der Abpresskante zur Ausnehmung aufweisen.

Die Erfindung betrifft ausserdem ein Verfahren zur Herstellung eines Verschlusselements mit einer Dichtung für ein Vakuumventil, mit einem Mehrfunktionswerkzeug wie beschrieben und mit einem das Verschlusselement oder zumindest einen Teil des Verschlusselements verkörpernden Materialrohteil.

Das Materialrohteil und ein Dichtmaterial werden in einem offenen Werkzeugzustand in das Mehrfunktionswerkzeug, insbesondere in die Aufnahme für das Dichtmaterial, eingebracht. In einem Verpressschritt durch Schliessen des Mehrfunktionswerkzeugs wird die Abpresskante in das Materialrohteil gedrückt. Dadurch werden eine zur Abpresskante korrespondierende Verpressung mit einer Presskante in dem Materialrohteil erzeugt und die Ausnehmung an ihrem ersten Ende abgeschlossen. Weiters wird das Dichtmaterial derart verformt und/oder verflüssigt, dass zumindest ein Teil des Dichtmaterials durch den bei dem Verpressschritt durch die Aussparung des Mehrfunktionswerkzeugs entstehenden Überlaufkanal in die Ausnehmung gelangt und diese ausfüllt.

In einem Vulkanisationsschritt erfolgt dann ein Ausvulkanisieren des Dichtmaterials im Wesentlichen entsprechend der Form der Ausnehmung derart, dass das Dichtmaterial derart ausgeformt und bezüglich der Presskante ausgebildet wird, dass der durch die Presskante erzeugte Oberflächenverlauf im Materialrohteil im Wesentlichen (einen ggf. leichten Winkelversatz umfassend) homogen, insbesondere linear, - durch den Oberflächenverlauf des Dichtmaterials - weitergeführt ist, und das Dichtmaterial haftend mit dem Materialrohteil verbunden wird (aufvulkanisiert wird).

Insbesondere wird das Dichtmaterial in einem an die Abpresskante angrenzenden Bereich derart ausgeformt, dass in diesem Bereich ein Oberflächenverlauf des Dichtmaterials in Querschnittsrichtung homogen ist und eine eine kantenlose Richtungsänderung des Oberflächenverlaufs, insbesondere zwischen 75° und 105°, bewirkende homogene Krümmung aufweist.

Insbesondere wird das Mehrfunktionswerkzeug während des Vulkanisationsschritts gemäss einer vorbestimmten Vernetzungskurve temperiert.

Für eine erforderliche Haftungsqualität des Dichtstoffes an dem Trägermaterial des Materialrohteils wird vorzugsweise ein Haftvermittler auf dem Materialrohteil vorgesehen.

Ein Verschlusselement, welches durch Ausführung des obigen Verfahrens erhalten wird, insbesondere wobei das Verschlusselement gemäss einer vorherig erwähnten Ausführungsform ausgebildet ist, ist ebenfalls Gegenstand der vorliegenden Erfindung.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Figs. 1a-b: einen Ausschnitt eines Verschlusselements nach dem Stand der Technik im Querschnitt;
- Fig. 2: eine erste Ausführungsform eines erfindungsgemässen Vakuumschieberventils des L-Typs in einer Zwischenposition des Verschlusselements in schematischer Querschnittsseitenansicht;
- Figs. 3a-b: eine Ausführungsform eines im Wesentlichen rechteckigen Verschlusselements für ein Vakuumventil gemäss der Erfindung in Draufsichtdarstellung;
- Figs. 4a-b: zwei Ausführungsformen einer auf einem Ventilteller (Verschlusselement) aufvulkanisierte Dichtung und einer an die Dichtung angrenzenden Verpressung gemäss der Erfindung in Querschnittsansicht; und
- Figs. 5a-b: ein erfindungsgemässes Werkzeug zur Herstellung eines erfindungsgemässen Verschlusselements in einem offenen Werkzeugzustand und einem geschlossenen Werkzeugzustand.

In Figur 2 ist eine erste Ausführungsform eines erfindungsgemässen Vakuumschieberventils dargestellt. Das Vakuumschieberventil besitzt ein Ventilgehäuse 10 mit einer Ventilwand 1, die eine Öffnung 2 mit einer Öffnungsachse 13 und mit einem länglichen, im Wesentlichen rechteckigen und einen die Öffnung 2 umlaufenden Ventilsitz 3 aufweist. Ein Verschlusselement 20 mit einer, insbesondere prozessseitig vorgesehenen, Verschlussseite 21, die einen etwas grösseren Querschnitt als die Öffnung 2 aufweist, dient zum im Wesentlichen gasdichten Verschliessen der Öffnung 2, indem die Verschlussseite 21 auf den Ventilsitz 3 gedrückt wird. Das Verschlusselement 20 wird von zwei parallel zueinander angeordneten Ventilstangen 6 getragen. Da die Ventilstangen in Figur 2 in der Seitenansicht gezeigt sind, ist dort lediglich eine Ventilstange 6 erkennbar. Gemäss alternativen erfindungsgemässen Ausführungsformen kann auch nur eine einzige Ventilstange 6 vorgesehen sein und das Verschlusselement 20 von dieser getragen sein.

Das Ventilgehäuse 10 unterteilt sich in einen Vakuumbereich 11, in welchem die Öffnung 2, der Ventilsitz 3 und die Verschlussplatte 20 angeordnet sind, und einen Antriebsbereich 12, der ausserhalb des Vakuumbereichs 11 liegt. Die beiden Ventilstangen 6 sind durch zwei gasdichte Durchführungen, die als Membrandichtungen oder Membranbälge mit Dichtungen an deren Endstücken (z.B. O-Ringe) ausgeführt sind, im Ventilgehäuse 10 von dem Vakuumbereich 11 in den Antriebsbereich 12 hindurchgeführt. Die Membrandichtungen oder die Membranbälge sind derart ausgeführt, dass die Ventilstangen 6 unter Aufrechterhaltung der gasdichten Abdichtung in einem gewissen Bewegungsbereich entlang einer Längsachse 8 und einer Querachse 9 bewegbar sind. Da der Antriebsbereich 12 von dem Vakuumbereich 11 gasdicht getrennt ist, kann im Antriebsbereich 12 ein Atmosphärendruck herrschen. Im Antriebsbereich 12 befindliche Reibpartikel können nicht in den sensiblen Vakuumbereich gelangen. Im Antriebbereich 12 ist eine Antriebseinheit 7 angeordnet.

Die Antriebseinheit 7 ist, derart ausgebildet ist, dass die Verschlussplatte 20 durch Verstellen der beiden Ventilstangen 6 entlang der geometrischen Längsachse 8 in eine Längsschliessrichtung z von einer Offenposition, in die hier gezeigte Zwischenposition, und durch Verstellen der beiden Ventilstangen 6 entlang der rechtwinklig zur Längsachse 8 verlaufenden geometrischen Querachse 9 in eine Querschliessrichtung y von der Zwischenposition, in eine Schliessposition, und zurück verstellbar (Bewegung der Verschlussplatte ist L-förmig, daher die Bezeichnung L-Typ).

Das Verschlusselement 20 weist eine umlaufende, aufvulkanisierte Dichtung 22 auf, welche mittels einer Verpressung hin zum inliegenden Bereich der Verschlussseite 21, also zur durch die Dichtung abgeschlossenen Fläche auf der Verschlussseite 21, begrenzt ist.

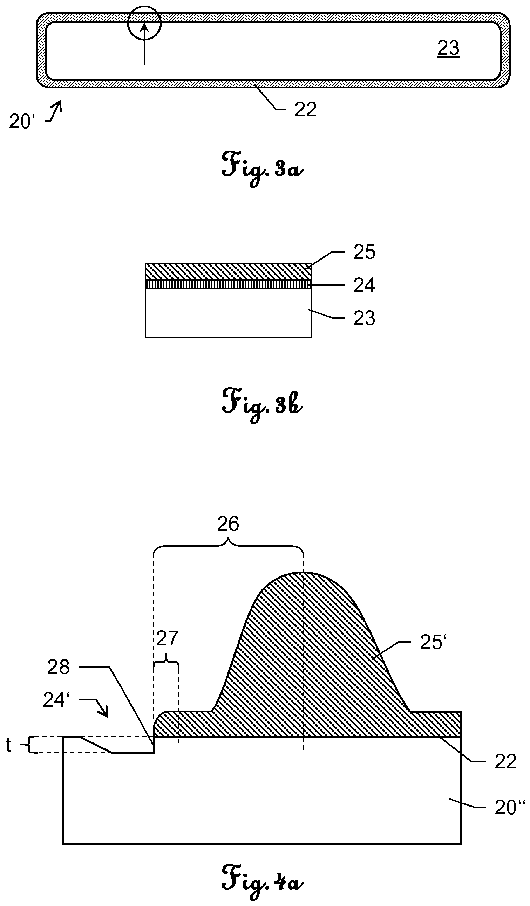

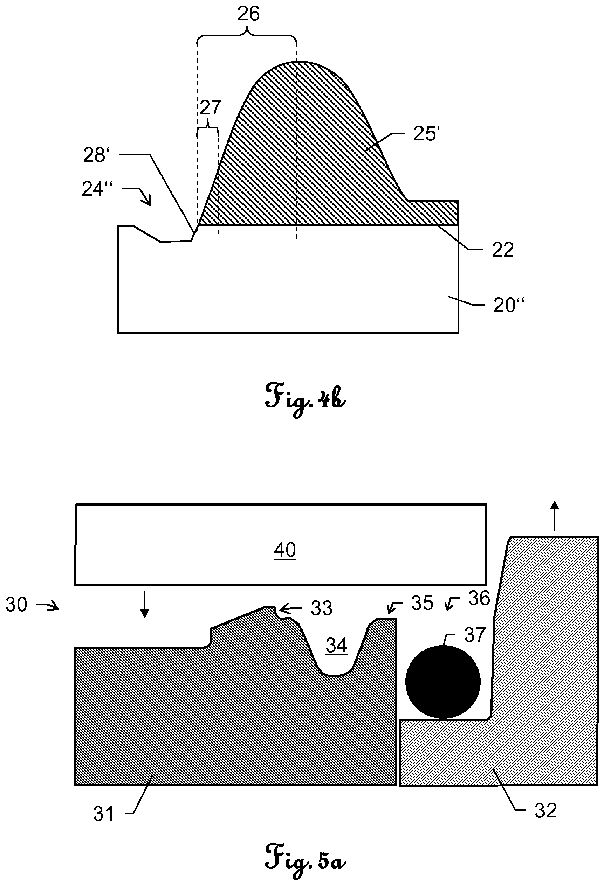

Eine detaillierte Darstellung und Beschreibung der erfindungsgemässen Ausgestaltung des Dichtungs- und Übergangsbereichs Dichtung/Metall ist nachfolgend (Figuren 4a und 4b) angeführt.

Eine weiter Ausführungsform der Erfindung betrifft ein Ventilschieberventil (hier nicht gezeigt), welches beispielsweise unter der Produktbezeichnung "MONOVAT Reihe 02 und 03" bekannt ist und als Rechteckinsertventil ausgestaltetes Transferventil der Firma VAT Vakuumventile AG in Haag, Schweiz einen rechteckigen Öffnungsquerschnitt aufweist, dessen Breite wesentlich grösser ist als dessen Höhe. Auch sind derartige Ventiltypen mit komplexen Dichtungsstrukturen bekannt, z.B. aus der EP 2 420 709 A1 der Anmelderin.

Solche Ventile sind ebenfalls zum gasdichten Schliessen eines Fliesswegs jedoch allein mittels einer Linearbewegung des Verschlusselements vorgesehen. Das Verschlussglied ist linear entlang einer zu der Öffnungsachse quer verlaufenden, geometrischen Verstellachse in einer Verschlussgliedebene von einer die Öffnung freigebenden, geöffneten Position in eine über die Öffnung linear geschobene, geschlossene Position in eine Schliessrichtung und umgekehrt zurück in eine Öffnungsrichtung verschiebbar. In einer Schliessposition ist das auf der Dichtfläche des Verschlusselements aufgebrachte Dichtmaterial auf die die Öffnung umlaufende Dichtfläche gedrückt.

Ein solches aus dem Stand der Technik bekanntes, mittels einer einzigen linearen Bewegung schliessbares Vakuumventil hat Vorteile gegenüber den mittels zweier Bewegungen schliessbaren Transferventilen (Fig. 2), die einen verhältnismässig komplex aufgebauten Antrieb erfordern, oder gegenüber den Keilventilen, bei welchen die Dichtungen quer beansprucht werden. Da das Verschlussglied des oben beschriebenen Vakuumventils einteilig ist, kann es hohen Beschleunigungskräften ausgesetzt werden, so dass dieses Ventil auch für Schnell- und Notverschlüsse verwendet werden kann. Das Schliessen und Dichten kann mittels einer einzigen linearen Bewegung erfolgen, so dass ein sehr schnelles Schliessen und Öffnen des Ventils möglich ist. Die umlaufende Dichtung findet in allen ihren Abschnitten eindeutig reproduzierbare Verhältnisse bei den diversen Schliessvorgängen vor. Da die Dichtung beim Schliessen und beim Auftreten des Schliessdruckes im Wesentlichen nur in Richtung der linearen Schliessbewegung in senkrechter Richtung auf die Dichtung bzw. teilweise in Längsrichtung, nicht jedoch quer zu ihrer Längserstreckung beansprucht wird, so dass Querkräfte auf die Dichtung vermieden werden, eignet sich dieses Vakuumventil für hochqualifizierte Dichtaufgaben im Vakuum- und Hochvakuumbereich.

Erfindungsgemäss ist das Dichtmaterial seitens des Verschlusselements (Verschlussglied) wiederum durch ein Verpressen und Aufvulkanisieren ausgebildet, sodass das Dichtmaterial und die Form der Verpressung einen homogenen Übergang zwischen Metall und Dichtmaterial bereitstellen und ein Nachbearbeiten nach dem Vulkanisieren entfallen kann.

Figur 3a zeigt ein im Wesentlichen rechteckiges Verschlusselement 20' für ein Vakuumventil gemäss der Erfindung, insbesondere für ein Vakuumventil des L-Typs, in einer Draufsichtdarstellung. Das Verschlusselement 20' ist aufgebaut aus einem Metall bzw. einer Metalllegierung, z.B. Aluminium oder Edelstahl, wobei eine Dichtfläche 22 mit einer darauf applizierten Dichtung am Rand des Verschlusselements 20' umlaufend vorgesehen ist.

Die Dichtung ist mittels Vulkanisierens eines vernetzbaren Dichtmaterials auf der Dichtfläche 22 erzeugt. Die Dichtfläche 22 ist hierfür insbesondere vor dem Vulkanisationsprozess und dem Aufbringen des Dichtmaterials mit einer Haftschicht, z.B. Haftvermittler oder Primer, versehen worden, um ein entsprechend gutes Anhaften der Dichtung auf dem Trägermaterial des Verschlusselements 20' bereitzustellen. Alternativ oder zusätzlich kann die Dichtfläche 22 selbst vorbehandelt sein bzw. werden um geforderte Hafteigenschaften bereitzustellen. Ein solches Vorbehandeln kann beispielsweise durch mechanisches Anrauhen, durch Anätzen der Oberfläche oder durch Bestrahlung der Oberfläche mit einem Plasma, Koronabehandlung oder UV-Bestrahlung durchgeführt werden. Generell gesprochen wird auf der Dichtfläche 22 vor Aufbringen des Dichtmaterials ein Oberflächenzustand hergestellt - sei es mittle einer Oberflächenbehandlung oder dem Erzeugen einer zusätzlichen Haftschicht -, der die geforderte Haftung bereitstellt.

Die Fläche 23, die von der Dichtfläche 22 bzw. der aufvulkanisierten Dichtung eingeschlossen ist, ist der im vorgesehenen Einsatz des Verschlusselements 20' in einem Vakuumventil dem abzuschliessenden Prozessvolumen zugewandte Bereich des Verschlusselements 20', wobei in einer Schliessposition des Ventils zudem ein Teil der Dichtung ebenfalls dem Prozessvolumen zugewandt bleibt.

Die Dimensionierung und Form der Dichtung läuft zur eingeschlossenen Fläche 23 hin zu einer Verpressung im Verschlusselement 20' aus. Dieser Übergang (vgl. mit Pfeil gekennzeichneter Bereich) ist schematisch ebenfalls in Draufsicht in Fig. 3b dargestellt.

Wie aus Figur 3b ersichtlich, grenzt die aufgebrachte Dichtung 25 an eine Verpressung 24 im Material an. Die Verpressung geht im weiteren Verlauf über in die unbeschichtete und im Zuge des Erzeugens der Dichtung 25 unbearbeitete, freie Verschlusselementfläche 23.

Figur 4a zeigt eine auf einem Ventilteller 20" (Verschlusselement) aufvulkanisierte Dichtung 25' und eine an die Dichtung angrenzende Verpressung 24' gemäss der Erfindung in Querschnittsansicht. Das Dichtmaterial 25' weist einen ersten Dichtungsabschnitt 26 auf, welcher in der gezeigten Ausführungsform - da dieser in Verwendung mit einem entsprechenden Vakuumventil seitens des als abzuschliessend vorgesehenen Prozessvolumens liegt - hinsichtlich Partikelrückstände und Verunreinigung den sensiblen Dichtungsabschnitt darstellt. Die Dichtung ist derart hergestellt, dass eine Nachbearbeitung nach einem Aufvulkanisieren des Dichtmaterials 25' zumindest für diesen Abschnitt 26 nicht notwendig ist und so keine Partikel oder Grate, z.B. durch Materialabtrag, entstehen.

Der erste Dichtungsabschnitt 26 weist ferner einen Bereich 27 auf, welcher an die Verpressung 24' im Ventilteller 25" angrenzt und bezüglich einer möglicherweise notwendigen Nachbearbeitung als kritisch anzusehen ist.

Zumindest in diesem Bereich 27 verläuft die Oberfläche des Dichtmaterials 25' homogen ohne eine Kante zu bilden. Der Oberflächenverlauf weist dabei zudem eine homogene Krümmung (insbesondere ohne einen Wendepunkt) auf, wodurch eine kontinuierliche Änderung der Richtung des Oberflächenverlaufs hier um ca. 90° bewirkt ist.

Zudem weist die Verpressung 24' eine Presskante 28 auf, die hinsichtlich ihrer Richtung und Position relativ zum Dichtmaterial derart ausgebildet ist, dass der homogene Oberflächenverlauf des Dichtmaterials 25' durch die Presskante 28 ebenso homogen und linear weitergeführt wird. Der Übergang von Dichtmaterial 25' zum Trägermaterial des Verschlusselements 20" ist dabei im Wesentlichen ohne Unterbrechung oder Diskontinuität der gemeinsamen Oberflächenlinien ausgeformt.

Ein solcher Übergang mit einem derart homogenen Oberflächenverlauf im Bereich 27 und einer Fortsetzung dieses Verlaufs durch eine spezifische Ausformung der Presskante 28, wird erfindungsgemäss mittels eines speziellen Werkzeugs (unten beschrieben) bereits beim Vorgang des Aufbringens des Dichtmaterials und des Vulkanisierens erzeugt und macht eine Nachbearbeitung zum Abtrag überschüssigen Dichtmaterials zumindest für diesen Bereich überflüssig.

Wäre eine Nachbearbeitung des Dichtmaterials und/oder des Trägermaterials dem Stand der Technik entsprechend notwendig, so könnte ein solch homogener Verlauf aufgrund dabei auftretender Zerspanungen und Gratbildung nicht erreicht werden.

Das Dichtmaterial 25' weist zudem eine Oberflächenrauheit auf, welche im Wesentlichen derjenigen der Werkzeugoberfläche entspricht und damit deutlich geringer ist als bei Ausführungen des Stands der Technik (beispielsweise Rₐ = 0.05 oder 0.1 µm). Erfindungsgemäss wird somit ein Verschlusselement für ein Vakuumventil bereitgestellt, welches verbesserte Materialqualität und Sauberkeit aufweist.

Ausserdem weist die Verpressung eine bestimmte Tiefe t bezüglich der Oberfläche des Verschlusselements 20" auf. Diese ist definiert durch eine die Verpressung erzeugende Werkzeugstruktur und liegt beispielsweise im Bereich um t = 0.2 mm. Vorzugsweise weist die Presskante 28 eine entsprechende Länge in Richtung der (parallel zur) Flächennormalen der Dichtfläche 22 auf.

Figur 4b zeigt eine weitere Ausführungsform des erfindungsgemässen Verschlusselements 20". Im Unterschied zur Ausführung gemäss Figur 4a ist die Presskante 28' der Verpressung 24" nicht parallel zur Flächennormalen der Dichtfläche 22 geführt, sondern gewinkelt dazu ausgeformt, wobei jedoch ein homogener Übergang des Dichtungsoberflächenverlaufs mittels des Verlaufs der Presskante 28' beibehalten ist.

Auch ist eine alternative, erfindungsgemäss umfasste Ausführungsform denkbar (nicht gezeigt), bezüglich welcher die Richtung der Presskante einen leichten Winkelversatz zur auslaufenden Oberflächenlinie des Dichtmaterials aufweist. Eine derartige Ausführung ist im Rahmen der vorliegenden Erfindung als im Wesentlichen homogene Weiterführung des Oberflächenverlaufs zu verstehen.

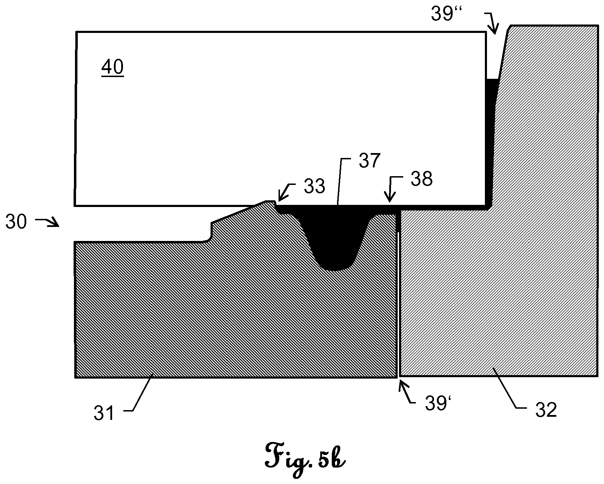

Figuren 5a und 5b zeigen ein erfindungsgemässes Werkzeug 30 in einem offenen Werkzeugzustand (Figur 5a) und einem geschlossenen Werkzeugzustand (Figur 5b).

Das Werkzeug weist ein Formteil 31 und ein Unterteil 32 auf. Das Formteil 31 weist ferner eine Ausnehmung 34 auf, welche zum einen Ende durch eine Abpresskante 33 des Formteils 31 begrenzt ist und zum zweiten Ende durch eine vorgesehene Aussparung 35 offen gehalten ist. Zudem ist eine Aufnahme 36 für das Dichtrohmaterial 37, z.B. eine aus dem Dichtmaterial gefertigte Schnur, vorgesehen, wobei diese Aufnahme 36 hier dem Unterteil 32 bzw. einem Zwischenraum zwischen Unterteil 32 und Formteil 31 zugeordnet ist.

Gezeigt ist ausserdem ein Materialrohteil 40, welches in Zusammenwirkung mit dem Werkzeug 30 zum einen mittels der Abpresskante 33 zu verpressen und zudem mit dem Dichtmaterial zu versehen ist. Das Rohteil 40 besteht beispielsweise zumindest teilweise aus Aluminium, einer Aluminiumlegierung, Stahl, Edelstahl oder einer alternativen geeigneten Metalllegierung. Insbesondere verkörpert das Rohteil 40 zumindest einen Teil eines Verschlusselements für ein Vakuumventil, wobei die mit dem Dichtmaterial zu versehene Seite der Verschlussseite, d.h. der Seite, welche einem abzuschliessenden Prozessvolumen zugewandt ist, mit dem Formteil 31 interagiert.

Beim Schliessen des Werkzeugs 30 wird das Materialrohteil 40 in z-Richtung auf das Formteil 31 zubewegt und die Abpresskante 33 in das Material gedrückt. Der Anpressdruck und der maximale Pressweg sind durch Elemente zur Druckregulierung, z.B. Tellerfedern, und einen entsprechenden Anschlag einstellbar. Zudem wird das Unterteil 32 des Werkzeugs 30 in entgegengesetzter Richtung verschoben, sodass das Volumen der Aufnahme 36 reduziert wird und das Dichtrohmaterial 37 via eines beim Schliessen des Werkzeugs 30 durch die Aussparung 35 verbleibenden Überlaufs 38 in die Ausnehmung 34 gelangt.

Im geschlossenen Werkzeugzustand (Figur 5b) ist die in das Rohteil 40 eingreifende (verpresste) Abpresskante 33 des Formteils 31 zu sehen, welche durch die Verpressung einen für das Dichtrohmaterial 37 dichten Abschluss der Ausnehmung 34 schafft. Der Raum der Ausnehmung 34 ist mit dem Dichtrohmaterial 37 vollständig ausgefüllt.

Durch die spezielle Konstruktion des Werkzeugs 30 sind zwischen dem Formteil 31 und dem Unterteil 32 und zwischen dem Unterteil 32 und dem Materialrohteil 40 jeweils Spalte 39', 39" offen gehalten, so dass durch diese überschüssiges Dichtmaterial abführbar ist.

Genau jener Materialüberschuss muss nach dem Vulkanisationsprozess entfernt werden. Das Entfernen erfolgt mittels Trimmen der entsprechenden Stellen, wodurch an diesen Stellen Verunreinigungen und Grate zurückbleiben. Gemäss dem Stand der Technik ist ein analoges Trimmen auch für die gegenüberliegende Seite der Dichtung erforderlich, da auch hier Spalte zum Abführen von überschüssigem Dichtmaterial vorgesehen sind und derartige Materialrückstände entstehen. Erst durch das erfindungsgemässe Abpressen der Dichtform am ersten Ende der Ausnehmung 34, wodurch dort ein Materialüberlauf verhindert ist, kann eine solche Nachbearbeitung zumindest an dieser Seite ausbleiben.

In diesem geschlossenen Werkzeugzustand erfolgt nach dem Schliessen des Werkzeugs 30 das Ausvulkanisieren des Dichtrohmaterials 37. Dadurch wird das Dichtrohmaterial 37 vernetzt, wodurch eine stabile und an dem Materialrohteil 40 anhaftende Dichtung erzeugt wird.

Es versteht sich, dass die dargestellten Figuren nur mögliche Ausführungsbeispiele schematisch darstellen. Die verschiedenen Ansätze können erfindungsgemäss ebenso miteinander sowie mit Verfahren und Vorrichtungen zum Verschliessen von Prozessvolumina unter Vakuumbedingungen des Stands der Technik kombiniert werden.

## Patentansprüche

1. Verschlusselement (20,20',20"), insbesondere Ventilteller, für ein Vakuumventil und ausgebildet zum gasdichten Abschluss eines Prozessvolumens mittels Zusammenwirkens mit einer für das Prozessvolumen vorgesehenen Vakuumventilöffnung (2) des Vakuumventils, mit
• einer zu einer zweiten Dichtfläche der Vakuumventilöffnung (2), insbesondere hinsichtlich Form und Grösse, korrespondierenden ersten Dichtfläche (22), wobei die zweite Dichtfläche die Vakuumventilöffnung (2) umläuft, und
• einem auf die erste Dichtfläche (22) und entsprechend ihrem Verlauf aufvulkanisierten, eine definierte Höhe in Richtung der Flächennormalen der ersten
Dichtfläche (22) aufweisenden
Dichtmaterial (25,25',37), wobei das
Dichtmaterial (25,25',37) eine definierte Form bezüglich eines Dichtmaterialquerschnitts aufweist mit
□ einem ersten, insbesondere prozessvolumenseitig vorgesehenen, Dichtungsabschnitt (26) und
□ einem zweiten, insbesondere vom Prozessvolumen abgewandt vorgesehenen, Dichtungsabschnitt,
**dadurch gekennzeichnet, dass**
• das Verschlusselement (20,20',20") eine an den ersten Dichtungsabschnitt (26) angrenzende Verpressung (24,24',24") mit einer Presskante (28,28') aufweist, und
• die Presskante (28,28') derart ausgeformt und bezüglich des ersten Dichtungsabschnitts (26) ausgebildet ist, dass der durch die Form des ersten Dichtungsabschnitts (26) gegebene und zur Presskante (28,28') auslaufende Oberflächenverlauf des Dichtmaterials (25,25',37) im Wesentlichen homogen, insbesondere linear, weitergeführt ist.

2. Verschlusselement (20,20',20") nach Anspruch 1,
**dadurch gekennzeichnet, dass**
der erste Dichtungsabschnitt (26) in einem an die Verpressung (24,24',24") angrenzenden Bereich (27) derart ausgeformt ist, dass in diesem Bereich (27) der Oberflächenverlauf des Dichtmaterials (25,25',37) homogen ist und eine eine kantenlose Richtungsänderung des Oberflächenverlaufs, insbesondere zwischen 75° und 105°, bewirkende homogene Krümmung aufweist.

3. Verschlusselement (20,20',20") nach Anspruch 2,
**dadurch gekennzeichnet, dass**
• die Krümmung wendepunktfrei ist, insbesondere eine konstante Krümmungsrichtung aufweist, und/oder
• die Richtungsänderung des Oberflächenverlaufs im an die Verpressung angrenzenden Bereich (27) im Wesentlichen 90° beträgt.

4. Verschlusselement (20,20',20") nach einem der Ansprüche 1 bis 3,
**dadurch gekennzeichnet, dass**
die Verpressung (24,24',24") eine Tiefe (t) in Richtung der Flächennormalen der ersten Dichtfläche (22) und bezüglich der Oberfläche der ersten Dichtfläche (22) im Bereich von 0.15 mm bis 0.25 mm aufweist.

5. Verschlusselement (20,20',20") nach einem der Ansprüche 1 bis 4,
**dadurch gekennzeichnet, dass**
die Presskante (28,28') eine Länge zwischen 0.15 mm und 0.25 mm aufweist.

6. Verschlusselement (20,20',20") nach einem der Ansprüche 1 bis 5,
**dadurch gekennzeichnet, dass**
die Presskante (28,28') im Wesentlichen parallel zur Flächennormalen der ersten Dichtfläche (22) verläuft.

7. Verschlusselement (20,20',20") nach einem der Ansprüche 1 bis 6,
**dadurch gekennzeichnet, dass**
der erste Dichtungsabschnitt (26) zumindest im an die Verpressung angrenzenden Bereich (27) eine mittlere Oberflächenrauheit Rₐ zwischen 0.02 µm und 0.15 µm, insbesondere zwischen 0.05 µm und 0.1 µm, aufweist.

8. Verschlusselement (20,20',20") nach einem der Ansprüche 1 bis 7,
**dadurch gekennzeichnet, dass**
der erste Dichtungsabschnitt (26) zumindest im an die Verpressung angrenzenden Bereich (27) eine gemittelte Oberflächenrautiefe R_{z} zwischen 0.2 µm und 1.5 µm, insbesondere zwischen 0.5 µm und 1 µm, aufweist.

9. Verschlusselement (20,20',20") nach einem der Ansprüche 1 bis 8,
**dadurch gekennzeichnet, dass**
das Dichtmaterial (25,25',37) ein Elastomer aufweist, insbesondere ein Fluorelastomer.

10. Verschlusselement (20,20',20") nach einem der Ansprüche 1 bis 9,
**dadurch gekennzeichnet, dass**
das Verschlusselement (20,20',20") aufweist
• eine Kopplung zur Verbindung mit einer Antriebseinheit (7) eines Vakuumventils zur Bereitstellung einer gesteuerten Bewegung des Verschlusselements (20,20',20") im Vakuumventil, insbesondere eine Aufnahme für eine Schubstange (6) der Antriebseinheit (7), insbesondere wobei
□ die Aufnahme seitlich im Verschlusselement (20,20',20") ausgeformt ist, zum abnehmbaren Montieren des Verschlusselement (20,20',20") auf der Schubstange (6) durch Eingreifen eines Verbindungsabschnitts der Schubstange in die Aufnahme, und
□ die Schubstange (6) mittels der Antriebseinheit (7) so gelagert und verstellbar ist, dass durch Verschieben des Verschlusselements (20,20',20") im Wesentlichen entlang der Schubstangenachse (8) über die Vakuumventilöffnung (2) und Andrücken des Verschlusselements (20,20',20") mit dessen Dichtmaterial (25,25',37) auf einen die Vakuumventilöffnung (2) umlaufenden Ventilsitz (3) die Vakuumventilöffnung (2) verschliessbar ist,
und/oder
• zumindest eine Griffmulde, die in einer einer Verschlussseite (21) mit dem aufvulkanisierten Dichtmaterial (25,25',37) des Verschlusselements (20,20',20") gegenüberliegenden Seite ausgeformt ist, zur manuellen Kraftaufbringung auf das Verschlusselement (20,20',20'') im Wesentlichen entlang der Schubstangenachse (8), insbesondere zum Abnehmen oder zur Montage des Verschlusselements (20,20',20") von bzw. auf der Schubstange (6).

11. Vakuumventil zum gasdichten Abschluss eines Prozessvolumens, mit
• einem Ventilgehäuse, das eine Vakuumventilöffnung (2) und einen die Vakuumventilöffnung (2) umlaufenden eine zweite Dichtfläche aufweisenden Ventilsitz (3) aufweist,
• einem Verschlusselement (20,20',20") zum im Wesentlichen gasdichten Verschliessen der Vakuumventilöffnung (2) mit einer ersten zu der zweiten Dichtfläche korrespondierenden Dichtfläche (22), wobei die erste Dichtfläche (22) ein aufvulkanisiertes, eine definierte Höhe in Richtung der Flächennormalen der ersten Dichtfläche aufweisendes Dichtmaterial (25,25',37) aufweist und das Dichtmaterial (25,25',37) eine definierte Form bezüglich eines Dichtmaterialquerschnitts aufweist mit
□ einem ersten, insbesondere prozessvolumenseitig vorgesehenen, Dichtungsabschnitt (26) und
□ einem zweiten, insbesondere vom Prozessvolumen abgewandt vorgesehenen, Dichtungsabschnitt,
• einer mit dem Verschlusselement (20,20',20") gekoppelten Antriebseinheit (7), die derart ausgebildet ist, dass das Verschlusselement (20,20',20") zumindest im Wesentlichen entlang einer geometrischen Längsachse (8) in eine Längsschliessrichtung von
□ einer Offenposition, in welcher das Verschlusselement (20,20',20") die Vakuumventilöffnung (2) freigibt, in
□ eine Schliessposition, in welcher die erste Dichtfläche (22) des Verschlusselements (20,20',20") auf die zweite Dichtfläche angedrückt ist und die Vakuumventilöffnung (2) im Wesentlichen gasdicht verschliesst,
und zurück verstellbar ist,
□ insbesondere durch eine Beweglichkeit des Verschlusselements (20,20',20") im Wesentlichen entlang einer rechtwinklig zur Längsachse verlaufenden geometrischen Querachse (9) in eine Querschliessrichtung in eine Zwischenposition, in welcher das Verschlusselement (20,20',20") die Vakuumventilöffnung (2) überdeckt und sich eine Verschlussseite (21) des Verschlusselements (20,20',20") in einer beabstandeten Gegenüberlage zum Ventilsitz (3) befindet, und zurück verstellbar ist,
**dadurch gekennzeichnet, dass**
• das Verschlusselement (20,20',20") eine an den ersten Dichtungsabschnitt (26) angrenzende Verpressung (24,24',24") mit einer Presskante (28,28') aufweist und
• die Presskante (28,28') derart ausgeformt und bezüglich des ersten Dichtungsabschnitts (26) ausgebildet ist, dass der durch die Form des ersten Dichtungsabschnitts (26) gegebene und zur Presskante (28,28') auslaufende Oberflächenverlauf des ersten Dichtungsabschnitts (26) im Wesentlichen homogen, insbesondere linear, weitergeführt ist, insbesondere wobei das Verschlusselement (20,20',20") nach einem der Ansprüche 1 bis 10 ausgebildet ist.

12. Mehrfunktionswerkzeug (30) für die Aufbringung und Ausformung eines Dichtmaterials (25,25',37), auf ein Verschlusselement (20,20',20") nach einem der Ansprüche 1 bis 10, auf einem Materialrohteil (40), mit
• einer die Form des resultierenden, vulkanisierten Dichtmaterials (25,25',37) definierenden Ausnehmung (34),
• einer ein erstes Ende der Ausnehmung (34) bezüglich eines Werkzeugquerschnitts bildenden Abpresskante (33),
• einer an die Ausnehmung (34) an ihrem zweiten Ende anschliessenden Aussparung (35) und
• einer Aufnahme (36) für das Dichtmaterial (25,25',37),
wobei
• die Ausnehmung (34) in einem an die Abpresskante (33) angrenzenden Bereich derart ausgeformt ist, dass ein Verlauf der Abpresskante (33) bezüglich des Werkzeugquerschnitts in diesem Bereich durch einen angepassten Werkzeugoberflächenverlauf im Wesentlichen homogen, insbesondere linear, weitergeführt ist,
• das Mehrfunktionswerkzeug (30) bei einem Schliessen des Werkzeugs mit dem eingebrachten Materialrohteil (40) derart zusammenwirkt, dass
□ die Abpresskante (33) in das Materialrohteil (40) verpresst und die Ausnehmung (34) an ihrem ersten Ende mit dem Materialrohteil (40) abschliesst,
□ die Aussparung (35) an dem zweiten Ende einen Überlaufkanal (38) bildet und
□ ein in der Aufnahme (36) vorliegendes Dichtmaterial (25,25',37) durch den Überlaufkanal (38) in die Ausnehmung (34) gedrückt wird und/oder fliesst und
• das Dichtmaterial (25,25',37) in einem geschlossenen Werkzeugzustand vulkanisierbar ist,
insbesondere wobei
• das Mehrfunktionswerkzeug gemäss einer vorbestimmten Vernetzungskurve temperierbar ist und/oder
• das Materialrohteil ein Verschlusselement (20,20',20") oder einen Teil des Verschlusselements (20,20',20") nach einem der Ansprüche 1 bis 10 bildet.

13. Mehrfunktionswerkzeug (30) nach Anspruch 12,
**dadurch gekennzeichnet, dass**
• die Ausnehmung (34) in dem an die Abpresskante (33) angrenzenden Bereich eine eine kantenlose Richtungsänderung des Werkzeugoberflächenverlaufs, insbesondere zwischen 75° und 105°, bewirkende homogene Krümmung aufweist, und/oder
• einen homogenen Übergang der Oberflächenlinie entlang des Werkzeugquerschnitts von der Abpresskante (33) zur Ausnehmung (34) aufweist.

14. Verfahren zur Herstellung eines
Verschlusselements (20,20',20") mit einer Dichtung (25,25',37) für ein Vakuumventil, mit
• einem Mehrfunktionswerkzeug (30) nach Anspruch 12 oder 13 und
• einem das Verschlusselement (20,20',20") oder einen Teil des Verschlusselements (20,20',20") verkörpernden Materialrohteil (40),
wobei
• das Materialrohteil (40) und ein Dichtmaterial (25,25',37) in einem offenen Werkzeugzustand in das Mehrfunktionswerkzeug (30), insbesondere in die Aufnahme für das Dichtmaterial (25,25',37), eingebracht werden,
• in einem Verpressschritt durch Schliessen des Mehrfunktionswerkzeugs (30)
□ die Abpresskante (33) in das Materialrohteil (40) gedrückt wird und dadurch
• eine zur Abpresskante (33) korrespondierende Verpressung (24,24',24") mit einer Presskante (28,28') in dem Materialrohteil (40) erzeugt wird und
• die Ausnehmung (34) an ihrem ersten Ende abgeschlossen wird, und
□ das Dichtmaterial (25,25',37) derart verformt und/oder verflüssigt wird, dass zumindest ein Teil des Dichtmaterials (25,25',37) durch den bei dem Verpressschritt durch die Aussparung (35) entstehenden Überlaufkanal (38) in die Ausnehmung (34) gelangt und diese ausfüllt und
• in einem Vulkanisationsschritt ein Vulkanisieren des Dichtmaterials (25,25',37) im Wesentlichen entsprechend der Form der Ausnehmung (34) derart erfolgt, dass
□ das Dichtmaterial (25,25',37) derart ausgeformt und bezüglich der Presskante (28,28') ausgebildet wird, dass der durch die Presskante (28,28') erzeugte Oberflächenverlauf im Materialrohteil (40) im Wesentlichen homogen, insbesondere linear, weitergeführt ist, und
□ das Dichtmaterial (25,25',37) haftend mit dem Materialrohteil (40) verbunden wird, insbesondere wobei
□ das Dichtmaterial (25,25',37) in einem an die Presskante (28,28') angrenzenden Bereich (27) derart ausgeformt wird, dass in diesem Bereich (27) der Oberflächenverlauf des Dichtmaterials (25,25',37) homogen ist und eine eine kantenlose Richtungsänderung des Oberflächenverlaufs, insbesondere zwischen 75° und 105°, bewirkende homogene Krümmung aufweist, und/oder
□ das Mehrfunktionswerkzeug (30) während des Vulkanisationsschritts gemäss einer vorbestimmten Vernetzungskurve temperiert wird.

15. Verschlusselement (20,20',20") erhalten durch Ausführung eines Verfahrens nach Anspruch 14, insbesondere wobei ein Verschlusselement (20,20',20") gemäss einem der Ansprüche 1 bis 10 ausgebildet ist.

## Claims

1. Closure element (20,20',20''), in particular a valve disk, for a vacuum valve and configured for the gastight close-off of a process volume by means of cooperation with a vacuum valve opening (2), provided for the process volume, of the vacuum valve, comprising
• a first sealing surface (22), corresponding, in particular in terms of shape and size, to a second sealing surface of the vacuum valve opening (2) wherein the second sealing surface surrounds the vacuum valve opening (2), and
• a sealing material (25,25',37) vulcanized onto the first sealing surface (22) in accordance with the course thereof and having a defined height in the direction of the surface normal of the first sealing surface (22), wherein the sealing material (25,25',37) has a defined shape with respect to a sealing material cross section, comprising
□ a first seal portion (26), particularly provided on the process volume side, and
□ a second seal portion, particularly provided facing away from the process volume,
**characterized in that**
• the closure element (20,20',20'') has a compression (24,24',24") adjoining the first seal portion (26) and having a pressing edge (28,28'), and
• the pressing edge (28,28') is shaped, and is configured with respect to the first seal portion (26), such that the surface course of the sealing material (25,25',37), which surface course is given by the shape of the first seal portion (26) and tapers into the pressing edge (28,28'), is continued substantially homogeneously, in particular linearly.

2. Closure element (20,20',20'') according to Claim 1,
**characterized in that**
the first seal portion (26) is shaped, in a region (27) adjoining the compression (24,24',24"), such that in this region (27) the surface course of the sealing material (25,25',37) is homogeneous and has a homogeneous curvature which produces an edgeless change of direction of the surface course, in particular between 75° and 105°.

3. Closure element (20,20',20'') according to Claim 2, **characterized in that**
• the curvature is free from turning points, in particular has a constant direction of curvature, and/or
• the change of direction of the surface course in the region (27) adjoining the compression amounts substantially to 90°.

4. Closure element (20,20',20'') according to any one of Claims 1 to 3,
**characterized in that**
the compression (24,24',24'') has a depth (t) in the direction of the surface normal of the first sealing surface (22) and with respect to the surface of the first sealing surface (22) within the range from 0.15 to 0.25 mm.

5. Closure element (20,20',20") according to any one of Claims 1 to 4,
**characterized in that**
the pressing edge (28,28') has a length between 0.15 mm and 0.25 mm.

6. Closure element (20,20',20") according to any one of Claims 1 to 5,
**characterized in that**
the pressing edge (28,28') runs substantially parallel to the surface normal of the first sealing surface (22).

7. Closure element (20,20',20") according to any one of Claims 1 to 6,
**characterized in that**
the first seal portion (26) has, at least in the region (27) adjoining the compression, a mean surface roughness Rₐ between 0.02 µm and 0.15 µm, in particular between 0.05 µm and 0.1 µm.

8. Closure element (20,20',20'') according to any one of Claims 1 to 7,
**characterized in that**
the first seal portion (26) has, at least in the region (27) adjoining the compression, an average surface roughness depth R_{z} between 0.2 µm and 1.5 µm, in particular between 0.5 µm and 1 µm.

9. Closure element (20,20',20'') according to any one of Claims 1 to 8,
**characterized in that**
the sealing material (25,25',37) has an elastomer, in particular a fluoroelastomer.

10. Closure element (20,20',20") according to any one of Claims 1 to 9,
**characterized in that**
the closure element (20,20',20'') has
• a coupling for connecting to a drive unit (7) of a vacuum valve in order to provide a controlled motion of the closure element (20,20',20'') in the vacuum valve, in particular a receptacle for a push rod (6) of the drive unit (7), in particular wherein
□ the receptacle is shaped in the side of the closure element (20,20',20"), for the removable mounting of the closure element (20,20',20") on the push rod (6) by engagement of a connecting portion of the push rod in the receptacle, and
□ the push rod (6) is supported and adjustable by means of the drive unit (7) such that the vacuum valve opening (2) is closable by displacement of the closure element (20,20',20'') substantially along the push rod axis (8) over the vacuum valve opening (2) and pressing of the closure element (20,20',20'') with its sealing material (25,25',37) onto a valve seat (3) surrounding the vacuum valve opening (2),
and/or
• at least one grip recess, which is shaped in a side lying opposite a closure side (21) with the vulcanized-on sealing material (25,25',37) of the closure element (20,20',20"), for the manual application of force to the closure element (20,20',20'') substantially along the push rod axis (8), in particular for the removal or mounting of the closure element (20,20',20'') from or on the push rod (6).

11. Vacuum valve for the gastight close-off of a process volume, comprising
• a valve housing, which has a vacuum valve opening (2) and a valve seat (3) surrounding the vacuum valve opening (2) and having a second sealing surface,
• a closure element (20,20',20") for the substantially gastight closure of the vacuum valve opening (2), having a first sealing surface (22) corresponding to the second sealing surface, wherein the first sealing surface (22) has a vulcanized-on sealing material (25,25',37) having a defined height in the direction of the surface normal of the first sealing surface, and the sealing material (25,25',37) has a defined shape with respect to a sealing material cross section, having
□ a first seal portion (26), particularly provided on the process volume side, and
□ a second seal portion, particularly provided facing away from the process volume,
• a drive unit (7) coupled with the closure element (20,20',20"), which drive unit is configured such that the closure element (20,20',20'') is adjustable at least substantially along a geometric longitudinal axis (8) in a longitudinal closing direction from
□ an open position, in which the closure element (20,20',20'') frees the vacuum valve opening (2), into
□ a closing position, in which the first sealing surface (22) of the closure element (20,20',20'') is pressed onto the second sealing surface and closes the vacuum valve opening (2) in a substantially gastight manner,
and back,
□ in particular by virtue of a mobility of the closure element (20,20',20'') substantially along a geometric transverse axis (9) running at right angles to the longitudinal axis, is adjustable in a transverse closing direction into an intermediate position, in which the closure element (20,20',20") covers the vacuum valve opening (2) and a closure side (21) of the closure element (20,20',20") is in a remote opposite position to the valve seat (3), and back,
**characterized in that**
• the closure element (20,20',20'') has a compression (24,24',24") adjoining the first seal portion (26) and having a pressing edge (28,28'), and
• the pressing edge (28,28') is shaped, and configured with respect to the first seal portion (26), such that the surface course of the first seal portion (26), which surface course is given by the shape of the first seal portion (26) and tapers into the pressing edge (28,28'), is continued substantially homogeneously, in particular linearly,
in particular wherein the closure element (20,20',20'') is configured according to any one of Claims 1 to 10.

12. Multifunctional tool (30) for the application and shaping of a sealing material (25,25',37), to a closure element (20,20',20'') according to any one of Claims 1 to 10, on a material blank (40), comprising
• a recess (34) defining the shape of the resulting, vulcanized sealing material (25,25',37),
• a press-off edge (33) forming a first end of the recess (34) with respect to a tool cross section,
• a slot (35) connecting to the recess (34) at its second end, and
• a receptacle (36) for the sealing material (25,25',37),
wherein
• the recess (34) is shaped, in a region adjoining the press-off edge (33), such that a course of the press-off edge (33) with respect to the tool cross section is continued in this region by an adapted tool surface course substantially homogeneously, in particular linearly,
• the multifunctional tool (30), upon closure of the tool, cooperates with the introduced material blank (40) such that
□ the press-off edge (33) is compressed into the material blank (40) and closes off the recess (34) at its first end with the material blank (40),
□ the slot (35) forms at the second end an overflow channel (38), and
□ a sealing material (25,25',37) present in the receptacle (36) is forced and/or flows through the overflow channel (38) into the recess (34),
and
• the sealing material (25,25',37), in a closed tool state, is vulcanizable,
in particular wherein
• the multifunctional tool can be tempered according to a predetermined cross-linking curve and/or
• the material blank forms a closure element (20,20',20'') or a part of the closure element (20,20',20'') according to any one of Claims 1 to 10.

13. Multifunctional tool (30) according to Claim 12, **characterized in that**
• the recess (34), in the region adjoining the press-off edge (33) has a homogeneous curvature producing an edgeless change of direction of the tool surface course, in particular between 75° and 105°, and/or
• has a homogeneous transition of the surface line along the tool cross section from the press-off edge (33) to the recess (34).

14. Method for manufacturing a closure element (20,20',20'') having a seal (25,25',37) for a vacuum valve, comprising
• a multifunctional tool (30) according to Claim 12 or 13 and
• a material blank (40) embodying the closure element (20,20',20'') or a part of the closure element (20,20',20"),
wherein
• in an open tool state, the material blank (40) and a sealing material (25,25',37) are introduced into the multifunctional tool (30), in particular into the receptacle for the sealing material (25,25',37),
• in a compression step, by closing of the multifunctional tool (30),
□ the press-off edge (33) is pressed into the material blank (40), whereby
• a compression (24,24',24'') corresponding to the press-off edge (33) and having a pressing edge (28,28') is created in the material blank (40), and
• the recess (34) is shut off at its first end, and
□ the sealing material (25,25',37) is deformed and/or liquefied such that at least a part of the sealing material (25,25',37) makes its way into the recess (34) through the overflow channel (38) formed in the compression step by the slot (35) and fills said recess, and
• in a vulcanization step, a vulcanization of the sealing material (25,25',37) is effected substantially in accordance with the shape of the recess (34) in such a way that
□ the sealing material (25,25',37) is shaped, and configured with respect to the pressing edge (28,28'), such that the surface course, created by the pressing edge (28,28'), in the material blank (40) is continued substantially homogeneously, in particular linearly, and
□ the sealing material (25,25',37) is adhesively connected to the material blank (40),
in particular wherein
□ the sealing material (25,25',37) is shaped, in a region (27) adjoining the pressing edge (28,28'), such that in this region (27) the surface course of the sealing material (25,25',37) is homogeneous and has a homogeneous curvature producing an edgeless change of direction of the surface course, in particular between 75° and 105°, and/or
□ the multifunctional tool (30) is tempered during the vulcanization step according to a predetermined cross-linking curve.

15. Closure element (20,20',20") acquired by implementation of a method according to Claim 14, in particular wherein a closure element (20,20',20'') is configured according to any one of Claims 1 to 10.

## Revendications

1. Elément de verrouillage (20, 20', 20"), en particulier tête de soupape, pour une soupape à vide et configuré en vue de la fermeture étanche au gaz d'un volume de traitement par le biais d'une coopération avec une ouverture de soupape à vide (2) de la soupape à vide prévue pour le volume de traitement, avec
• une première face d'étanchéité (22) correspondant, en particulier en ce qui concerne la forme et la grandeur, à une deuxième face d'étanchéité de l'ouverture de soupape à vide (2), dans lequel la deuxième face d'étanchéité entoure l'ouverture de soupape à vide (2), et
• un matériau d'étanchéité (25, 25', 37) vulcanisé sur la première face d'étanchéité (22) et de façon correspondante à son tracé et présentant une hauteur définie dans la direction de la normale à la surface de la première face d'étanchéité (22), dans lequel le matériau d'étanchéité (25, 25', 37) présente une forme définie par rapport à une section transversale du matériau d'étanchéité, avec
∘ une première partie de joint (26), prévue en particulier du côté du volume de traitement et
∘ une deuxième partie de joint, prévue en particulier à l'opposé du volume de traitement, **caractérisé en ce que**
• l'élément de verrouillage (20, 20', 20") présente une zone comprimée (24, 24', 24") adjacente à la première partie de joint (26) avec une arête de pressage (28, 28'), et
• l'arête de pressage (28, 28') est façonnée et configurée par rapport à la première partie de joint (26) de telle manière que l'allure de la surface du matériau d'étanchéité (25, 25', 37) donnée par la forme de la première partie de joint (26) et se terminant à l'arête de pressage (28, 28') se poursuive de façon essentiellement homogène, en particulier linéaire.

2. Elément de verrouillage (20, 20', 20") selon la revendication 1, **caractérisé en ce que** la première partie de joint (26) est façonnée dans une région (27) adjacente à la zone comprimée (24, 24', 24") de telle manière que l'allure de la surface du matériau d'étanchéité (25, 25', 37) soit homogène dans cette région (27) et présente une courbure homogène opérant un changement de direction sans arête de l'allure de la surface, en particulier compris entre 75° et 105°.

3. Elément de verrouillage (20, 20', 20") selon la revendication 2, **caractérisé en ce que**
• la courbure ne présente pas de point d'inflexion, et présente en particulier un sens de courbure constant, et/ou
• le changement de direction de l'allure de la surface vaut essentiellement 90° dans la région (27) adjacente à la zone comprimée.

4. Elément de verrouillage (20, 20', 20") selon l'une quelconque des revendications 1 à 3, **caractérisé en ce que** la zone comprimée (24, 24', 24") présente une profondeur (t) dans la direction de la normale à la surface de la première face d'étanchéité (22) et par rapport à la première face d'étanchéité (22) comprise dans la plage de 0,15 mm à 0,25 mm.

5. Elément de verrouillage (20, 20', 20") selon l'une quelconque des revendications 1 à 4, **caractérisé en ce que** l'arête de pressage (28, 28') présente une longueur comprise entre 0,15 mm et 0,25 mm.

6. Elément de verrouillage (20, 20', 20") selon l'une quelconque des revendications 1 à 5, **caractérisé en ce que** l'arête de pressage (28, 28') est essentiellement parallèle à la normale à la surface de la première face d'étanchéité (22).

7. Elément de verrouillage (20, 20', 20") selon l'une quelconque des revendications 1 à 6, **caractérisé en ce que** la première partie de joint (26) présente, au moins dans la région (27) adjacente à la zone comprimée, une rugosité de surface moyenne Rₐ comprise entre 0,02 µm et 0,15 µm, en particulier entre 0,05 µm et 0,1 µm.

8. Elément de verrouillage (20, 20', 20") selon l'une quelconque des revendications 1 à 7, **caractérisé en ce que** la première partie de joint (26) présente, au moins dans la région (27) adjacente à la zone comprimée, une profondeur de rugosité de surface moyenne R_{z} comprise entre 0,2 µm et 1,5 µm, en particulier entre 0,5 µm et 1 µm.

9. Elément de verrouillage (20, 20', 20") selon l'une quelconque des revendications 1 à 8, **caractérisé en ce que** le matériau d'étanchéité (25, 25', 37) présente un élastomère, en particulier un élastomère fluoré.

10. Elément de verrouillage (20, 20', 20") selon l'une quelconque des revendications 1 à 9, **caractérisé en ce que** l'élément de verrouillage (20, 20', 20") présente
• un couplage pour la liaison avec une unité d'entraînement (7) d'une soupape à vide pour la création d'un mouvement commandé de l'élément de verrouillage (20, 20', 20") dans la soupape à vide, en particulier un logement pour une tige de poussée (6) de l'unité d'entraînement (7), en particulier dans lequel
∘ le logement est formé latéralement dans l'élément de verrouillage (20, 20', 20"), pour le montage amovible de l'élément de verrouillage (20, 20', 20") par engagement d'une partie de liaison de la tige de poussée (6) dans le logement, et
∘ la tige de poussée (6) est montée et réglable au moyen de l'unité d'entraînement (7), de telle manière que l'ouverture de soupape à vide (2) puisse être fermée par déplacement de l'élément de verrouillage (20, 20', 20") essentiellement le long de l'axe de la tige de poussée (8) au-dessus de l'ouverture de soupape à vide (2) et application de l'élément de verrouillage (20, 20', 20") avec son matériau d'étanchéité (25, 25', 37) sur un siège de soupape (3) entourant l'ouverture de soupape à vide (2),
et/ou
• au moins un creux de poignée, qui est formé dans un côté opposé à un côté de fermeture (21) avec le matériau d'étanchéité vulcanisé (25, 25', 37) de l'élément de verrouillage (20, 20', 20"), pour l'application manuelle d'une force à l'élément de verrouillage (20, 20', 20") essentiellement le long de l'axe de la tige de poussée (8), en particulier pour l'enlèvement ou le montage de l'élément de verrouillage (20, 20', 20") de ou sur la tige de poussée (6).

11. Soupape à vide pour la fermeture étanche au gaz d'un volume de traitement, avec
• un corps de soupape, qui présente une ouverture de soupape à vide (2) et un siège de soupape (3) entourant l'ouverture de soupape à vide (2) et présentant une deuxième face d'étanchéité,
• un élément de verrouillage (20, 20', 20") pour la fermeture essentiellement étanche au gaz de l'ouverture de soupape à vide (2) avec une première face d'étanchéité (22) correspondant à la deuxième face d'étanchéité, dans laquelle la première face d'étanchéité (22) présente un matériau d'étanchéité (25, 25', 37) vulcanisé, présentant une hauteur définie dans la direction de la normale à la surface de la première face d'étanchéité et le matériau d'étanchéité (25, 25', 37) présente une forme définie par rapport à une section transversale du matériau d'étanchéité, avec
∘ une première partie de joint (26), prévue en particulier du côté du volume de traitement, et
∘ une deuxième partie de joint, prévue en particulier à l'opposé du volume de traitement,
• une unité d'entraînement (7) couplée à l'élément de verrouillage (20, 20', 20"), qui est réalisée de telle manière que l'élément de verrouillage (20, 20', 20") soit déplaçable essentiellement le long d'un axe longitudinal géométrique (8) dans la direction de fermeture longitudinale depuis
∘ une position ouverte, dans laquelle l'élément de verrouillage (20, 20', 20") libère l'ouverture de soupape à vide (2), jusqu'à
∘ une position fermée, dans laquelle la première face d'étanchéité (22) de l'élément de verrouillage (20, 20', 20") est appliquée contre la deuxième face d'étanchéité et ferme de façon essentiellement étanche au gaz l'ouverture de soupape à vide (2),
et inversement,
∘ est déplaçable en particulier par une mobilité de l'élément de verrouillage (20, 20', 20") essentiellement le long d'un axe transversal géométrique (9) orienté perpendiculairement à l'axe longitudinal dans une direction de fermeture transversale dans une position intermédiaire, dans laquelle l'élément de verrouillage (20, 20', 20") recouvre l'ouverture de soupape à vide (2) et un côté de fermeture (21) de l'élément de verrouillage (20, 20', 20") se trouve dans une position opposée distante du siège de soupape (3), et inversement,
**caractérisée en ce que**
• l'élément de verrouillage (20, 20', 20") présente une zone comprimée (24, 24', 24") avec une arête de pressage (28, 28') adjacente à la première partie de joint (26) et
• l'arête de pressage (28, 28') est façonnée et configurée par rapport à la première partie de joint (26), de telle manière que l'allure de la surface de la première partie de joint (26) donnée par la forme de la première partie de joint (26) et se terminant à l'arête de pressage (28, 28') se poursuive de façon essentiellement homogène, en particulier linéaire,
dans laquelle en particulier l'élément de verrouillage (20, 20', 20") est réalisé selon l'une quelconque des revendications 1 à 10.

12. Outil multifonctionnel (30) pour le dépôt et le façonnage d'un matériau d'étanchéité (25, 25', 37) sur un élément de verrouillage (20, 20', 20") selon l'une quelconque des revendications 1 à 10, sur une pièce brute de matière (40), avec
• un évidement (34) définissant la forme du matériau d'étanchéité vulcanisé résultant (25, 25', 37),
• une arête de décrochage (33) formant une première extrémité de l'évidement (34) par rapport à une section transversale de l'outil,
• une découpe (35) se raccordant à l'évidement (34) à sa deuxième extrémité et
• un logement (36) pour le matériau d'étanchéité (25, 25', 37),
dans lequel
• l'évidement (34) est formé dans une région adjacente à l'arête de décrochage (33), de telle manière qu'une allure de l'arête de décrochage (33) se poursuive dans cette région de façon essentiellement homogène, en particulier linéaire, par une allure de surface de l'outil adaptée par rapport à la section transversale de l'outil,
• l'outil multifonctionnel (30) coopère, lors d'une fermeture de l'outil, avec la pièce brute de matériau introduite (40), de telle manière que
∘ l'arête de décrochage (33) s'enfonce dans la pièce brute de matériau (40) et ferme l'évidement (34) à sa première extrémité avec la pièce brute de matériau (40),
∘ la découpe (35) forme à la deuxième extrémité un canal de débordement (38), et
∘ un matériau d'étanchéité (25, 25', 37) présent dans le logement (36) soit chassé et/ou s'écoule à travers le canal de débordement (38) dans l'évidement (34),
• le matériau d'étanchéité (25, 25', 37) peut être vulcanisé dans un état fermé de l'outil,
en particulier dans lequel
• l'outil multifonctionnel peut être équilibré en température suivant une courbe de réticulation prédéterminée et/ou
• la pièce brute de matériau forme un élément de verrouillage (20, 20', 20") ou une partie de l'élément de verrouillage (20, 20', 20") selon l'une quelconque des revendications 1 à 10.

13. Outil multifonctionnel (30) selon la revendication 12, **caractérisé en ce que**
• l'évidement (34) présente dans la région adjacente à l'arête de décrochage (33) une courbure homogène opérant un changement de direction sans arête de l'allure de la surface de l'outil, en particulier compris entre 75° et 105°, et/ou
• présente une transition homogène de la ligne de surface le long de la section transversale de l'outil de l'arête de décrochage (33) à l'évidement (34).

14. Procédé de fabrication d'un élément de verrouillage (20, 20', 20") avec un joint (25, 25', 37) pour une soupape à vide, avec
• un outil multifonctionnel (30) selon la revendication 12 ou 13 et
• une pièce brute de matériau (40) représentant l'élément de verrouillage (20, 20', 20") ou une partie de l'élément de verrouillage (20, 20', 20")
dans lequel
• on introduit la pièce brute de matériau (40) et un matériau d'étanchéité (25, 25', 37) dans un état ouvert de l'outil dans l'outil multifonctionnel (30), en particulier dans le logement pour le matériau d'étanchéité (25, 25', 37),
• dans une étape de compression par fermeture de l'outil multifonctionnel (30)
∘ on presse l'arête de décrochage (33) dans la pièce brute de matériau (40) et ainsi
▪ on produit une zone comprimée (24, 24', 24") correspondant à l'arête de décrochage (33) avec une arête de pressage (28, 28') dans la pièce brute de matériau (40) et
▪ on ferme l'évidement (34) à sa première extrémité, et
∘ on déforme et/ou on liquéfie le matériau d'étanchéité (25, 25', 37) de telle manière qu'au moins une partie du matériau d'étanchéité (25, 25', 37) parvienne dans l'évidement (34) par le canal de débordement (38) formé par la découpe (35) lors de l'étape de compression et le remplisse, et
• dans une étape de vulcanisation, on effectue une vulcanisation du matériau d'étanchéité (25, 25', 37) essentiellement de façon correspondante à la forme de l'évidement (34), de telle manière que
∘ on déforme et on façonne par rapport à l'arête de pressage (28, 28') le matériau d'étanchéité (25, 25', 37), de telle manière que l'allure de la surface produite par l'arête de pressage (28, 28') dans la pièce brute de matériau (40) se poursuive de façon essentiellement homogène, en particulier linéaire, et
∘ on assemble le matériau d'étanchéité (25, 25', 37) par adhérence à la pièce brute de matériau (40),
en particulier dans lequel
∘ on façonne le matériau d'étanchéité (25, 25', 37) dans une région (27) adjacente à l'arête de pressage (28, 28') de telle manière que l'allure de la surface du matériau d'étanchéité (25, 25', 37) soit homogène dans cette région (27) et présente une courbure homogène opérant un changement de direction sans arête de l'allure de la surface, compris en particulier entre 75° et 105°,
et/ou
∘ on égalise la température de l'outil multifonctionnel (30) pendant l'étape de vulcanisation suivant une courbe de réticulation prédéterminée.

15. Elément de verrouillage (20, 20', 20") obtenu par la mise en oeuvre d'un procédé selon la revendication 14, en particulier dans lequel un élément de verrouillage (20, 20', 20") est façonné selon l'une quelconque des revendications 1 à 10.
